# EUROPEAN PATENT APPLICATION

(11) **EP 4 776 165 A1**
(43) Date of publication of application: **15.07.2026**
(21) Application number: 26151232.1
(22) Date of filing: 12.01.2026
(51) Int. Cl.: G06F 21/44, G06F 21/55, H04L 9/40

(54) **NAC MAC SPOOFING DETECTION**

(30) Priority: 13.01.2025 US 202563744568 P; 05.12.2025 US 202519410903
(71) Applicant: Juniper Networks, Inc., Sunnyvale, CA 94089-1206 (US)
(72) Inventor: NAIR, Akshay S, Sunnyvale, CA 94089 (US); DEMENTYEV, Viacheslav, Sunnyvale, CA 94089 (US); WANG, Wenfeng, Sunnyvale, CA 94089 (US); YANG, Bo-Chieh, Sunnyvale, CA 94089 (US); WONG, Vince Lloyd, Sunnyvale, CA 94089 (US); THOMAS, Jacob, Sunnyvale, CA 94089 (US)
(74) Representative: D Young & Co LLP

(57) **Abstract**

Techniques are disclosed for a computing system that compares media access control (MAC) address profiles associated with the MAC address of a device to detect anomalies between the MAC address profiles. In one example, the computing system obtains a current profile of a MAC address associated with a device requesting access to a network at a location. The computing system compares the current profile of the MAC address to one or more historical profiles of the MAC address over time or concurrent profiles of the MAC address at other locations. The computing system detects an anomaly between the current profile of the MAC address and at least one of the historical profiles or the concurrent profiles of the MAC address. The computing system generates a notification identifying the anomaly.

## Description

This application claims the benefit of US Patent Application No. 19/410,903, filed 5 December 2025, which claims the benefit of US Provisional Patent Application No. 63/744,568, filed 13 January 2025.

### TECHNICAL FIELD

The disclosure relates generally to computer networks and, more specifically, to managing access to computer networks.

### BACKGROUND

Commercial premises or sites, such as offices, hospitals, airports, stadiums, or retail outlets, often install complex wireless network systems, including a network of wireless access points (APs), throughout the premises to provide wireless network services to one or more client devices (or simply, "clients"). APs are physical, electronic devices that enable other devices to wirelessly connect to a wired network using various wireless networking protocols and technologies, such as wireless local area networking protocols conforming to one or more of the IEEE 802.11 standards (i.e., "WiFi"), Bluetooth / Bluetooth Low Energy (BLE), mesh networking protocols such as ZigBee or other wireless networking technologies.

Many different types of client devices, such as laptop computers, smartphones, tablets, wearable devices, appliances, and Internet of Things (IoT) devices, incorporate wireless communication technology and can be configured to connect to wireless access points when the device is in range of a compatible AP. In order to gain access to a wireless network, a client device may first need to authenticate to the AP. Authentication may occur via a handshake exchange between the client device, the AP, and an Authentication, Authorization, and Accounting (AAA) server controlling access at the AP. Client devices in enterprise networks can be authenticated for network access via Institute of Electrical and Electronics Engineers (IEEE) 802.1X Port-based Network Access Control (PNAC) or Media Access Control Authentication Bypass (MAB).

### SUMMARY

Particular aspects are set out in the appended independent claims. Various optional embodiments are set out in the dependent claims.

In general, this disclosure describes one or more techniques for detecting an anomaly between a current profile of a media access control (MAC) address associated with a device and a known profile of the MAC address and determining whether the anomaly is indicative of MAC spoofing. A cloud-based network management system (NMS) and/or cloud-based network access control (NAC) systems may authenticate and authorize client devices to access networks, such as branch or campus enterprise networks. The NAC systems may identify client devices and provide client devices with the appropriate authorizations or access policies based on their identities, e.g., by assigning the client devices to certain virtual local area networks (VLANs), applying certain access control lists (ACLs), directing the client devices to certain registration portals, or the like. As part of the authentication and authorization processes, the NMS compares current MAC address profiles to historical and/or concurrent MAC address profiles to detect anomalies, which may be indicative of MAC spoofing.

The techniques of this disclosure provide one or more technical advantages and practical applications. For example, the techniques may provide anomaly detection between a current MAC address profile associated with a MAC address and a known MAC address profile for the same MAC address. Further, the techniques may enable determination of whether the anomaly between the MAC address profiles is indicative of MAC spoofing or a legitimate change to the profile of the MAC address. The use of multiple data sources to fingerprint or profile client devices may enable the system to identify MAC spoofing attempts that would be otherwise challenging to detect without a diverse source of data. In some examples, the system may obtain fingerprint information from the multiple data sources in real-time, thus enabling real-time identification of MAC spoofing attempts.

In an example, a system includes memory and processing circuitry in communication with the memory and configured to obtain a current profile of a media access control (MAC) address associated with a device requesting access to a network at a location; compare the current profile of the MAC address to one or more of historical profiles of the MAC address over time or concurrent profiles of the MAC address at other locations; detect an anomaly between the current profile of the MAC address and at least one of the historical profiles or the concurrent profiles of the MAC address; and generate a notification identifying the anomaly.

In another example, a method includes obtaining, by a computing system, a current profile of a media access control (MAC) address associated with a device requesting access to a network at a location; comparing, by the computing system, the current profile of the MAC address to one or more of historical profiles of the MAC address over time or concurrent profiles of the MAC address at other locations; detecting, by the computing system, an anomaly between the current profile of the MAC address and at least one of the historical profiles or the concurrent profiles of the MAC address; and generating, by the computing system, a notification identifying the anomaly.

In yet another example, computer-readable media includes (e.g. stores and/or conveys) instructions that, when executed, cause processing circuitry to obtain a current profile of a media access control (MAC) address associated with a device requesting access to a network at a location; compare the current profile of the MAC address to one or more of historical profiles of the MAC address over time or concurrent profiles of the MAC address at other locations; detect an anomaly between the current profile of the MAC address and at least one of the historical profiles or the concurrent profiles of the MAC address; and generate a notification identifying the anomaly.

The details of one or more examples of the techniques of this disclosure are set forth in the accompanying drawings and the description below. Other features, objects, and advantages of the techniques will be apparent from the description and drawings, and from the claims.

### BRIEF DESCRIPTION OF DRAWINGS

FIG. 1A is a block diagram of an example network system including a network management system and network access control systems, in accordance with one or more techniques of the disclosure.
FIG. 1B is a block diagram illustrating further example details of the network system of FIG. 1A.
FIG. 2 is a block diagram of an example network access control system, in accordance with one or more techniques of this disclosure.
FIG. 3 is a block diagram of an example network management system, in accordance with one or more techniques of the disclosure.
FIG. 4 is a block diagram of an example access point device, in accordance with one or more techniques of this disclosure.
FIG. 5 is a block diagram of an example edge device, in accordance with one or more techniques of this disclosure.
FIG. 6 is a conceptual diagram illustrating an example operation of fingerprinting and anomaly detection, in accordance with the techniques of this disclosure.
FIG. 7 is a flow chart illustrating an example operation to detect anomalies, in accordance with one or more techniques of this disclosure.

### DETAILED DESCRIPTION

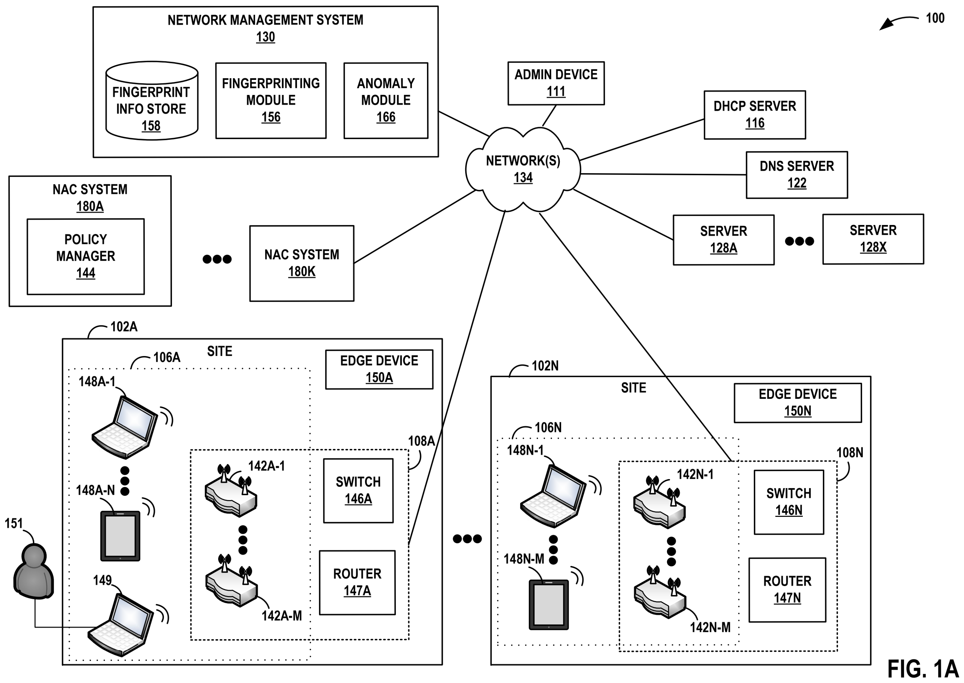

FIG. 1A is a block diagram of an example network system 100 including network access control (NAC) systems 180A-180K and network management system (NMS) 130, in accordance with one or more techniques of this disclosure. Example network system 100 includes a plurality sites 102A-102N at which a network service provider manages one or more wireless networks 106A-106N, respectively. Although in FIG. 1A each site 102A-102N is shown as including a single wireless network 106A-106N, respectively, in some examples, each site 102A-102N may include multiple wireless networks, and the disclosure is not limited in this respect.

Each site 102A-102N includes a plurality of network access server (NAS) devices 108A-108N, such as access points (APs) 142, switches 146, and routers 147. NAS devices may include any network infrastructure devices capable of authenticating and authorizing client devices to access an enterprise network. For example, site 102A includes NAS devices 108A, such as a plurality of APs 142A-1 through 142A-M, a switch 146A, and a router 147A. Similarly, site 102N includes NAS devices 108N a plurality of APs 142N-1 through 142N-M, a switch 146N, and a router 147N. Each AP 142 may be any type of wireless access point, including, but not limited to, a commercial or enterprise AP, a router, or any other device that is connected to a wired network and is capable of providing wireless network access to client devices within the site. In some examples, each of APs 142A-1 through 142A-M at site 102A may be connected to one or both of switch 146A and router 147A. Similarly, each of APs 142N-1 through 142N-M at site 102N may be connected to one or both of switch 146N and router 147N.

Each site 102A-102N also includes a plurality of client devices, otherwise known as user equipment devices (UEs), referred to generally as UEs or client devices 148, representing various wired and/or wireless-enabled devices within each site. For example, a plurality of UEs 148A-1 through 148A-K are currently located at site 102A. Similarly, a plurality of UEs 148N-1 through 148N-K are currently located at site 102N. Each UE 148 may be any type of wireless client device, including, but not limited to, a mobile device such as a smart phone, tablet or laptop computer, a personal digital assistant (PDA), a wireless terminal, a smart watch, smart ring, or other wearable device. UEs 148 may also include wired client-side devices, e.g., Internet of Things (IoT) devices such as printers, projectors, security devices, environmental sensors, or any other device connected to the wired network and configured to communicate over one or more wireless networks 106.

In order to provide wireless network services to UEs 148 and/or communicate over the wireless networks 106, APs 142 and the other wired client-side devices at sites 102 are connected, either directly or indirectly, to one or more network devices (e.g., switches, routers, gateways, or the like) via physical cables, e.g., Ethernet cables. Although illustrated in FIG. 1A as if each site 102 includes a single switch and a single router, in other examples, each site 102 may include more or fewer switches and/or routers. In addition, two or more switches at a site may be connected to each other and/or connected to two or more routers, e.g., via a mesh or partial mesh topology in a hub-and-spoke architecture. In some examples, interconnected switches 146 and routers 147 comprise wired local area networks (LANs) at sites 102 hosting wireless networks 106.

Example network system 100 also includes various networking components for providing networking services within the wired network including, as examples, NAC systems 180 including or providing access to Authentication, Authorization and Accounting (AAA) servers for authenticating users and/or UEs 148, a Dynamic Host Configuration Protocol (DHCP) server 116 for dynamically assigning network addresses (e.g., IP addresses) to UEs 148 upon authentication, a Domain Name System (DNS) server 122 for resolving domain names into network addresses, a plurality of servers 128A-128X (collectively "servers 128") (e.g., web servers, databases servers, file servers and the like), and NMS 130. As shown in FIG. 1A, the various devices and systems of network 100 are coupled together via one or more network(s) 134, e.g., the Internet and/or an enterprise intranet.

In the example of FIG. 1A, NMS 130 is a cloud-based computing platform that manages wireless networks 106A-106N at one or more of sites 102A-102N. As further described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. In some examples, NMS 130 outputs notifications, such as alerts, alarms, graphical indicators on dashboards, log messages, text / SMS messages, email messages, and the like, and/or recommendations regarding wireless network issues to a site or network administrator ("admin") interacting with and/or operating admin device 111. Additionally, in some examples, NMS 130 operates in response to configuration input received from the administrator interacting with and/or operating admin device 111.

The administrator and admin device 111 may comprise IT personnel and an administrator computing device associated with one or more of sites 102. Admin device 111 may be implemented as any suitable device for presenting output and/or accepting user input. For instance, admin device 111 may include a display. Admin device 111 may be a computing system, such as a mobile or non-mobile computing device operated by a user and/or by the administrator. Admin device 111 may, for example, represent a workstation, a laptop or notebook computer, a desktop computer, a tablet computer, or any other computing device that may be operated by a user and/or present a user interface in accordance with one or more aspects of the present disclosure. Admin device 111 may be physically separate from and/or in a different location than NMS 130 such that admin device 111 may communicate with NMS 130 via network 134 or other means of communication.

In some examples, one or more of NAS devices 108, e.g., APs 142, switches 146, and routers 147, may connect to edge devices 150A-150N via physical cables, e.g., Ethernet cables. Edge devices 150 comprise cloud-managed, wireless local area network (LAN) controllers. Each of edge devices 150 may comprise an on-premises device at a site 102 that is in communication with NMS 130 to extend certain microservices from NMS 130 to the on-premises NAS devices 108 while using NMS 130 and its distributed software architecture for scalable and resilient operations, management, troubleshooting, and analytics.

Each one of the network devices of network system 100, e.g., NAC systems 180, servers 116, 122 and/or 128, APs 142, switches 146, routers 147, UEs 148, edge devices 150, and any other servers or devices attached to or forming part of network system 100, may include a system log or an error log module wherein each one of these network devices records the status of the network device including normal operational status and error conditions. Throughout this disclosure, one or more of the network devices of network system 100, e.g., servers 116, 122 and/or 128, APs 142, switches 146, routers 147, and UEs 148, may be considered "third-party" network devices when owned by and/or associated with a different entity than NMS 130 such that NMS 130 does not directly receive, collect, or otherwise have access to the recorded status and other data of the third-party network devices. In some examples, edge devices 150 may provide a proxy through which the recorded status and other data of the third-party network devices may be reported to NMS 130.

In the example of FIG. 1A, each of NAC systems 180 comprises a cloud-based network access control service at multiple, geographically distributed points of presence. Typically, network access control functionality is offered by on-premises appliances that are limited by processing power and memory as well as maintenance and upgrade issues. Offering cloud-based network access control services avoids the limitations and improves network administration. A centralized, cloud-based deployment of network access control, however, introduces issues with latency and failures that may block client devices from network access.

In accordance with the disclosed techniques, NAC systems 180 provide multiple points of presence or NAC clouds at several geographic regions. NMS 130 is configured to manage NAC configuration, including access policies for enterprise networks, and push the appropriate NAC configuration data or files to the respective NAC systems 180A-180K. In this way, NAC systems 180 provide the same benefits as a centralized, cloud-based network access control service with lower latency and high availability.

NAC systems 180 provide a way of authenticating client devices 148 to access wireless networks 106, such as branch or campus enterprise networks. NAC systems 180 may each include or provide access to an Authentication, Authorization, and Accounting (AAA) server, e.g., a RADIUS server, to authenticate client devices 148 prior to providing access to the enterprise network via the NAS devices 108. In some examples, NAC systems 180 may enable certificate-based authentication of client devices or enable interaction with cloud directory services to authenticate the client devices.

NAC systems 180 may identify client devices 148 and provide client devices 148 with the appropriate authorizations or access policies based on their identities, e.g., by assigning the client devices to certain virtual local area networks (VLANs), applying certain access control lists (ACLs), directing the client devices to certain registration portals, or the like. NAC systems 180 may identify client devices 148 by analyzing network behavior of the client devices, referred to as fingerprinting. Identification of client devices and/or NAS devices may be performed based on media access control (MAC) addresses, DHCP options used to request IP addresses, link layer discovery protocol (LLDP) packets, Hypertext Transfer Protocol (HTTP) user agent information, location information, DNS information, and/or device type and operating system information.

Client devices 148 may include multiple different categories of devices with respect to a given enterprise, such as trusted enterprise devices, bring-your-own-device (BYOD) devices, IoT devices, and guest devices. NAC system 180 may be configured to subject each of the different categories of devices to different types of tracking, different types of authorization, and different levels of access privileges. In some examples, after a client device gains access to the enterprise network, NAC systems 180 may monitor activities of the client device to identify security concerns and, in response, re-assign the client device to a quarantine VLAN or another less privileged VLAN to restrict access of the client device.

NMS 130 is configured to operate according to an artificial intelligence / machine-learning-based computing platform providing comprehensive automation, insight, and assurance (WiFi Assurance, Wired Assurance and WAN assurance) spanning from "client," e.g., client devices 148 connected to wireless networks 106 and wired local area networks (LANs) at sites 102 to "cloud," e.g., cloud-based application services that may be hosted by computing resources within data centers.

As described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. For example, NMS 130 may be configured to proactively monitor and adaptively configure network 100 so as to provide self-driving capabilities.

In some examples, AI-driven NMS 130 also provides configuration management, monitoring and automated oversight of software defined wide-area networks (SD-WANs), which operate as an intermediate network communicatively coupling wireless networks 106 and wired LANs at sites 102 to data centers and application services. In general, SD-WANs provide seamless, secure, traffic-engineered connectivity between "spoke" routers (e.g., routers 147) of the wired LANs hosting wireless networks 106, such as branch or campus enterprise networks, to "hub" routers further up the cloud stack toward the cloud-based application services. SD-WANs often operate and manage an overlay network on an underlying physical Wide-Area Network (WAN), which provides connectivity to geographically separate customer networks. In other words, SD-WANs extend Software-Defined Networking (SDN) capabilities to a WAN and allow network(s) to decouple underlying physical network infrastructure from virtualized network infrastructure and applications such that the networks may be configured and managed in a flexible and scalable manner.

In some examples, AI-driven NMS 130 may enable intent-based configuration and management of network system 100, including enabling construction, presentation, and execution of intent-driven workflows for configuring and managing devices associated with wireless networks 106, wired LAN networks, and /or SD-WANs. For example, declarative requirements express a desired configuration of network components without specifying an exact native device configuration and control flow. By utilizing declarative requirements, what should be accomplished may be specified rather than how it should be accomplished. Declarative requirements may be contrasted with imperative instructions that describe the exact device configuration syntax and control flow to achieve the configuration. By utilizing declarative requirements rather than imperative instructions, a user and/or user system is relieved of the burden of determining the exact device configurations required to achieve a desired result of the user/system. For example, it is often difficult and burdensome to specify and manage exact imperative instructions to configure each device of a network when various different types of devices from different vendors are utilized. The types and kinds of devices of the network may dynamically change as new devices are added and device failures occur. Managing various different types of devices from different vendors with different configuration protocols, syntax, and software versions to configure a cohesive network of devices is often difficult to achieve. Thus, by only requiring a user/system to specify declarative requirements that specify a desired result applicable across various different types of devices, management and configuration of the network devices becomes more efficient. Further example details and techniques of an intent-based network management system are described in U.S. Patent No. 10,756,983, entitled "Intent-based Analytics," and U.S. Patent No. 10,992,543, entitled "Automatically generating an intent-based network model of an existing computer network," each of which is hereby incorporated by reference.

NMS 130 may orchestrate the authentication of client devices 148 and/or client device 149 as part of managing network system 100. NMS 130 may provide information regarding client devices 148 and network access policies to NAC systems 180 for use by NAC systems 180. NAC systems 180 may process authentication requests and determine whether to grant connectivity to one or more of networks 160 using the information and/or network access policies.

As one example, NAC system 180A may receive a request (referred to herein as "network access request" or "network admission request") to access network(s) 106, 134 from client device 148A-1 via at least one of NAS devices 108 (e.g., APs 142, switch 146A, router 147A). NAC system 180A may authenticate client device 148A-1 and initially apply a default or "catch all" authorization to provide limited network access to client device 148A-1 while NMS 130 fingerprints or profiles client device 148A-1. The generated fingerprint or profile may be stored and indexed using a MAC address associated with client device 148A-1 for later use by NMS 130 and/or NAC systems 180. In another example, NAC system 180A receives a network access request from client device 149, where client device 149 has previously connected to network(s) 106, 134. NAC system 180A determines that client device 149 is a known device based on a stored profile of the MAC address associated with client device 149 and grants connectivity to network(s) 106, 134 based on a previous authorization granted to the MAC address associated with client device 149.

As described above, fingerprinting information may include information specifying network behavior and location information of the client device associated with a network access request. If client device 148A-1 is a new client device requesting access to network(s) 106, 134 (e.g., MAC address of client device 148A-1 is not recognized), fingerprinting module 156 may store the fingerprinting information of client device 148A-1 mapped to a MAC address of client device 148A-1 in a database. The information stored in fingerprint info store 158 may represent the fingerprinting information of authorized client devices.

NMS 130 may provide fingerprinting information from fingerprint info store 158 to NAC systems 180. NMS 130 may provide the fingerprinting information to one or more of NAC systems 180 on a periodic basis, in response to a request from NAC systems 180, and/or based on other factors. NMS 130 may provide or "push" fingerprinting information from fingerprint info store 158 down to NAC systems 180 for use in authenticating devices to networks 106. In an example, NAC system 180A receives an authentication request from client device 149. NAC system 180A generates a request for fingerprinting information associated with client device 149 and provides the request to NMS 130. NMS 130 receives the request and provides the fingerprinting information associated with client device 149 to NAC system 180A. NAC system 180A uses the fingerprinting information to determine whether to grant network connectivity to client device 149.

NAC systems 180 may use fingerprinting information stored by NAC systems 180 to dynamically re-authenticate client devices requesting to access the network. NAC systems 180 may use the stored fingerprinting information to determine an authentication policy for the client devices (e.g., an authentication policy that may grant comparatively greater access/connectivity than an initial authentication policy). For example, NAC systems 180 may use a MAC address profile of a MAC address associated with client device 149 to determine an updated authentication policy for client device 149 after client device 149 has been initially authenticated using a default authentication policy.

Typically, client devices in enterprise networks may be authenticated for network access via Institute of Electrical and Electronics Engineers (IEEE) 802.1X Port-based Network Access Control (PNAC). For example, a client device that supports 802.1X may provide credentials (e.g., username/password or digital certificate) to an authenticator (e.g., a switch or access point), which encapsulates the message and forwards the message to an authentication server. However, many devices (e.g., Internet of Things devices, headless devices, etc.) may use MAC Authentication Bypass (MAB), which uses port-based access control by using a MAC address of the client device and may be less secure than 802.1X. For example, the use of MAB may result in increased risk of MAC spoofing by malicious parties.

In accordance with the techniques described in this disclosure, NMS 130 compares MAC address profiles associated with a MAC address of a device to detect anomalies between the profiles. NMS 130 may use fingerprinting module 156 configured to obtain a current MAC address profile associated with a MAC address of a client device and compare the current MAC address profile to known MAC address profiles associated with the MAC address of the client device. NMS 130 may compare known MAC address profiles that include historical and/or concurrent MAC address profiles of the MAC address to the current MAC address profile associated with the client device to detect anomalies between the MAC addresses profiles (e.g., MAC address profiles associated with the same MAC address). Fingerprinting module 156 may generate notifications identifying the anomalies between MAC address profiles based on the detection of an anomaly between MAC address profiles. By consistently fingerprinting known client devices and comparing the new or current profiles against other profiles of the same MAC addresses associated with the known client devices, the disclosed techniques enable detection of changes to or anomalies in profiles of known MAC addresses and further determination of whether the detected changes or anomalies are indicative of MAC spoofing. In some scenarios, the disclosed techniques enable real-time determination of MAC spoofing and remediation, e.g., access removal and/or quarantine, of the malicious device. While described in the context of NMS 130, NAC systems 180 may provide similar functionality as NMS 130 with respect to the detection of anomalies between MAC address profiles. For example, NAC systems 180 may generate MAC address profiles and detect anomalies between the MAC address profiles.

Fingerprinting module 156 obtains a current profile of a MAC address associated with a device requesting access to network(s) 106, 134 at a location. Fingerprinting module 156 may obtain a current profile of a MAC address associated with a device (alternatively referred to as a "current MAC address profile" throughout) requesting access to network(s) 106, 134, where the current MAC address profile includes information regarding one or more attributes and/or other information associated with the MAC address and/or the device. Fingerprinting module 156 may obtain the information from one or more sources, such as DHCP server 116, the device itself, neighboring devices (e.g., network neighbors), and/or other sources of information. In an example, fingerprinting module 156 receives an indication that client device 149 has requested access to network(s) 106, 134. Fingerprinting module 156 obtains a current profile of the MAC address as including information associated with the MAC address of the device and the device itself.

As part of obtaining a current MAC address profile for a device, fingerprinting module 156 may generate or construct the MAC address profiles using data attributes obtained from one or more sources. Fingerprinting module 156 may obtain data attributes that include information associated with the MAC address of the device, such as OS version, type of device, subnet that the device is connected to, and/or other information from sources such as those described above (e.g., DHCP server 116). NAC systems 180 may provide information to NMS 130 for use by fingerprinting module 156 in constructing MAC address profiles. In some examples, fingerprinting module 156 may construct a consolidated MAC address profile using data attributes from a variety of sources within network system 100. Fingerprinting module 156 may aggregate the data attributes associated with the MAC address and construct a current MAC address profile. In an example, fingerprinting module 156 obtains data attributes associated with a MAC address of a client device that include information regarding the device being a printer and the OS version of the printer. Fingerprinting module 156 aggregates the data attributes and constructs the MAC address profile associated with the MAC address of the printer and as including the aggregated data attributes. In some examples, one or more of NAC systems 180 may construct the MAC address profile independent of NMS 130 and/or in conjunction with NMS 130.

Fingerprinting module 156 may maintain historical MAC address profiles in fingerprint info store 158. Fingerprinting module 156 may store a current profile of a MAC address in fingerprint info store 158 for later use as a historical MAC address profile. In some examples, fingerprinting module 156 may store MAC address profiles as historical MAC address profiles as the MAC address profiles are obtained and/or constructed. For example, fingerprinting module 156 may generate a MAC address profile for a device within site 102A and store the MAC address profile for later use as a historical MAC address profile. Fingerprinting module 156 may store a current MAC address profile as a historical MAC address profile after authenticating the associated device, after the associated device disconnects from network(s) 106, 134, and/or in response to other events. In an example, fingerprinting module 156 obtains a current profile of a MAC address associated with client device 149. Fingerprint module 156 completes an authentication of client device 149 using the current MAC address profile and stores the current MAC address profile in fingerprint info store 158 for later use as a historical MAC address profile.

Fingerprinting module 156 may obtain concurrent MAC address profiles of devices connected to network(s) 106, 134 and/or requesting access to network(s) 106, 134. Fingerprinting module 156 may obtain concurrent MAC address profiles that are MAC address profiles of a device/MAC address associated with other instances of a device connecting and/or connected to network(s) 106, 134. In an example, fingerprinting module 156 obtains a current MAC address profile for client device 149. Fingerprinting module 156 determines that a fingerprint store of NAC system 180A includes a concurrent MAC address profile associated with the same MAC address as client 149 and retrieves the concurrent MAC address profile. Fingerprinting module 156 may obtain the concurrent MAC address profiles based on determining that the same device and/or devices with the same MAC address are simultaneously trying to connect or are connected to network(s) 106, 134 (e.g., that the same device is connected to network(s) 106, 134 at different sites 102, the same device is connected to different subnets within the same site, etc.). In an example, fingerprinting module 156 receives an authentication request from a first device located in site 102A and obtains a current MAC address profile for the first device. Fingerprinting module 156 determines that a second device located in site 102N associated with the same MAC address as the first device is also requesting authentication. Fingerprinting module 156 obtains a concurrent MAC address profile of the MAC address at site 102N for use in determining whether to authenticate the first device.

Anomaly module 166 may compare a current MAC address profile of a MAC address associated with a device with one or more known MAC address profiles (e.g., historical, concurrent) of the same MAC address. Anomaly module 166 may be a software component of NMS 130 configured to detect anomalies between MAC address profiles associated with a MAC address of a device. Anomaly module 166 may compare a current MAC address profile to at least one of historical MAC address profiles or concurrent MAC address profile to identify anomalies between the MAC address profiles, such as the same MAC address connecting at multiple physical locations and/or using different subnets within a location, a device associated with a MAC address being previously profiled as one type of device and then being profiled as a different type of device (e.g., a "printer" attempting to reconnect to network(s) 106, 134 as a "Linux workstation"), a device behaving in a way inconsistent with the type of device (e.g., a webcam sending web links), and/or other anomalies. For example, anomaly module 166 may compare a current profile of a MAC address associated with UE 148A-1 at site 102A to a concurrent profile of a MAC address associated with UE 148A-M to identify anomalies. In some examples, anomaly module 166 may determine that the existence of a concurrent MAC address profile is in of itself an anomaly (e.g., that a client device should not have MAC address profiles from multiple physical locations).

Fingerprinting module 156 may obtain MAC address profiles of devices within groups of devices (alternatively referred to as "clusters") as part of identifying anomalies. Fingerprinting module 156 may obtain MAC address profiles (e.g., current and/or known profiles) for devices within groups of devices that are identified as being the same type of device and/or otherwise grouped together. Fingerprinting module 156 may associate the MAC address profiles of the devices included in groups of devices for use in identifying anomalies among devices within the groups and determining whether the anomalies are caused by a legitimate change. For example, fingerprinting module 156 may generate clusters of devices that include devices of the same type or other categorization and that are associated with the MAC address profiles of the devices with the cluster.

Anomaly module 166 may observe changes in MAC address profiles associated with individual devices or sub-groups of devices to the behaviors of the groups of devices using MAC address profiles. Anomaly module 166 may determine changes in the MAC address profiles exhibited by the groups of devices, such as certain types of changes in MAC address profiles, and behaviors by the individual devices/sub-groups of devices. Anomaly module 166 may observe changes in MAC address profiles over time and/or in real time to detect anomalies in the MAC address profiles of devices within groups of devices.

Anomaly module 166 may compare changes in MAC address profiles associated with individual devices against changes in profiles exhibited by other devices. In some examples, anomaly module 166 may compare sub-groups of devices to the groups or clusters of devices. Anomaly module 166 may compare changes in MAC address profiles to detect differences in behaviors in devices indicated by changes in MAC address profiles. In an example, anomaly module 166 compares changes in a MAC address profile associated with UE 148A-1 to changes in MAC address profiles associated with devices in a group of devices that includes UE 148A-1. Anomaly module 166 may determine one or more differences or deviations between the changes in MAC address profiles of individual devices and/or sub-groups of devices and changes in MAC address profiles associated with other devices in groups of devices.

Anomaly module 166 may determine differences in changes to MAC address profiles among devices within a group. Anomaly module 166 may determine, based on the differences, whether anomalies associated with the changes in MAC address profiles are legitimate or are indicative of an issue, such as MAC spoofing. Anomaly module 166 may use the comparison of MAC address profiles to filter changes to MAC address profiles that are legitimate. For example, anomaly module 166 may determine a change in a MAC address profile exhibited by a given device is also exhibited by the majority of other devices in a group that includes the given device and that the exhibited change is unlikely to be indicative of MAC address spoofing (e.g., the change is more likely a legitimate software update performed by devices in the group of devices).

In some examples, anomaly module 166 compares changes to a MAC address profile of a device to MAC address profiles of devices within groups of devices in real time or near real time. Anomaly module 166 may obtain data regarding changes to a MAC address profile of a device (e.g., newly generated MAC address profiles, changes to known MAC address profiles, etc.) and compare the changes to the MAC address profiles to MAC address profiles of other devices in the same group. In an example, anomaly module 166 determines that a MAC address profile associated with UE 148A-1 has changed. Anomaly module 166 compares the MAC address profile of UE 148A-1 to MAC address profiles of other devices in the same group of devices.

Anomaly module 166 may determine whether an anomaly is indicative of MAC spoofing. Anomaly module 166 may determine whether the anomaly is indicative of MAC spoofing based on one or more factors, such as whether a given device is also connected to network(s) 106, 134 at multiple sites of sites 102, whether a device exhibits behaviors different from that of a group of devices, and/or other factors. For example, anomaly module 166 may determine that an anomaly associated with a device is indicative of MAC spoofing instead of other reasons than the anomaly (e.g., a legitimate software update or other change to a device). For example, anomaly module 166 may determine a quantity of other devices that are the same type of device that are also experiencing an anomaly exhibited by a given device. Based on the quantity of other devices not satisfying a threshold (e.g. a predetermined threshold), anomaly module 166 may determine that anomaly is indicative of MAC spoofing.

Anomaly module 166 may generate notifications identifying anomalies between MAC address profiles. Anomaly module 166 may determine whether to generate a notification and/or whether to refrain from generating a notification based on whether an anomaly is indicative of MAC spoofing. For instance, anomaly module 166 may determine that a given anomaly is not indicative of MAC spoofing and refrain from generating a notification regarding the anomaly. Anomaly module 166 may generate a notification that includes information regarding the device and the associated anomaly, such as the MAC address of the device, other identifiers of the device, a description of the anomaly, timestamps of when the anomaly occurred, details of the anomaly, context information associated with the detection of the anomaly, supporting evidence that the anomaly is indicative of MAC spoofing, and/or other information. NMS 130 may provide the notification to one or more recipients, such as an administrator, e.g., admin device 111, of sites 102. In some examples, anomaly module 166 may cause NMS 130 to provide the notification to one or more of NAC systems 180 for NAC systems 180 to perform an action (e.g., blocking network access) with respect to the device that is suspected of MAC spoofing.

NMS 130 may push updates to fingerprinting information stored by NAC systems 180 to cause NAC systems 180 to take one or more policy actions with respect to a device. For instance, NMS 130 may push updates to MAC address profiles for a policy manager 144 of NAC systems 180 to take enforcement action(s). NAC systems 180 include policy manager 144, which may be a software component of NAC systems 180 configured to enforce authorization policies in addition to other functionality. Policy manager 144 may enforce one or more changes to an authorization level associated with a device based on a notification or indication received from NMS 130. In an example, NAC system 180A receives an indication from NMS 130 that UE 148A-1 is to be quarantined from the network. Policy manager 144 applies an authorization policy to the fingerprinting information and revokes a current authorization for UE 148A-1 and moves UE 148A-1 to quarantine.

While described in the context of NMS 130, one or more components of network system 100 may implement fingerprinting module 156 and/or other modules. NMS 130, NAC systems 180, and/or other components may implement a portion or the entirety of the techniques of this disclosure. For example, one or more of NAC systems 180 may execute fingerprinting module 156 and/or anomaly module 166.

The techniques of this disclosure may provide one or more technical and practical advantages. In an example, the techniques may enable anomaly detection using a current MAC address profile and a known MAC address profile for the same MAC address. In another example, the use of a MAC address profile for a device may enable an NMS to discern between legitimate changes to a device and MAC spoofing attempts. In yet another example, the comparison of MAC address profiles among devices in groups of devices may further enable an NMS to differentiate between legitimate changes in a MAC address profile associated with the MAC address of a device (e.g., software updates) and MAC spoofing within groups of devices. Further, the use of diverse sources of data may enable an NMS to detect MAC spoofing in real time with relatively high accuracy and enable a NAC system to take appropriate authentication actions.

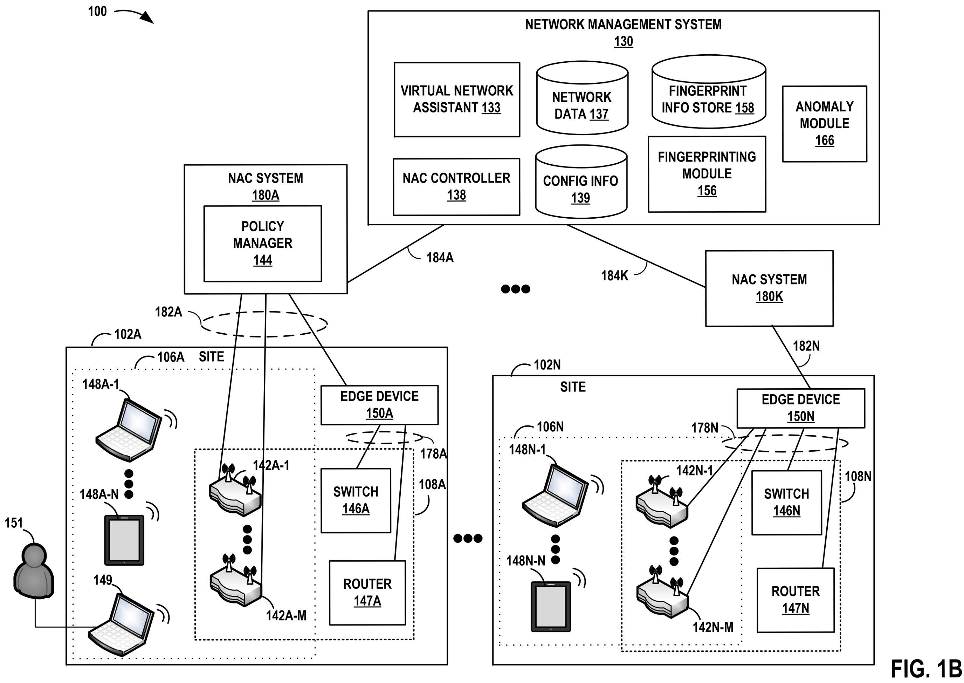

FIG. 1B is a block diagram illustrating further example details of the network system of FIG. 1A. In this example, FIG. 1B illustrates logical connections 178A-178N, 182A-182N, and 184A-184K, between NAS devices 108 at sites 102, NAC systems 180, and NMS 130. In addition, FIG. 1B illustrates NMS 130 configured to operate according to an AI-based computing platform to provide configuration and management of one or more of NAC systems 180 and NAS devices 108 at sites 102 via logical connections.

In operation, NMS 130 observes, collects and/or receives network data 137, which may take the form of data extracted from messages, counters, and statistics, for example, from one or more of APs 142, switches 146, routers 147, edge devices 150, NAC systems 180, and/or other nodes within network 134. NMS 130 provides a management plane for network 100, including management of enterprise-specific configuration information 139 for one or more of NAS devices 108 at sites 102 and NAC systems 180. Each of the one or more NAS devices 108 and each of NAC systems 180 may have a secure connection with NMS 130, e.g., a WebSocket or another secure tunnel. Each of the NAS devices 108 and NAC systems 180 may download the appropriate enterprise-specific configuration information 139 from NMS 130 and enforce the configuration. In some scenarios, one or more of the NAS devices 108 may be a third-party device or otherwise not support establishment of a secure connection directly with NMS 130. In these scenarios, edge devices 150 may provide proxies through which the NAS devices 108 may connect to NMS 130.

In accordance with one specific implementation, a computing device is part of NMS 130. In accordance with other implementations, NMS 130 may comprise one or more computing devices, dedicated servers, virtual machines, containers, services, or other forms of environments for performing the techniques described herein. Similarly, computational resources and components implementing VNA 133 may be part of the NMS 130, may execute on other servers or execution environments, or may be distributed to nodes within network 134 (e.g., routers, switches, controllers, gateways, and the like).

In some examples, NMS 130 monitors network data 137, e.g., one or more service level expectation (SLE) metrics, received from each site 102A-102N, and manages network resources, such as the one or more of APs 142, switches 146, routers 147, and edge devices 150 at each site, to deliver a high-quality wireless experience to end users, IoT devices and clients at the site. In other examples, NMS 130 monitors network data 137 received from NAC systems 180 and manages enterprise-specific configuration information 139 for NAC systems 180 to enable unconstrained network access control services for client devices 148 at sites 102 with low latency and high availability.

As illustrated in FIG. 1B, NMS 130 may include a virtual network assistant (VNA) 133 that implements an event processing platform for providing real-time insights and simplified troubleshooting for IT operations, and that automatically takes corrective action or provides recommendations to proactively address network issues. VNA 133 may, for example, include an event processing platform configured to process hundreds or thousands of concurrent streams of network data 137 from sensors and/or agents associated with APs 142, switches 146, routers 147, edge devices 150, NAC systems 180, and/or other nodes within network 134. For example, VNA 133 of NMS 130 may include an underlying analytics and network error identification engine and alerting system in accordance with various examples described herein. The underlying analytics engine of VNA 133 may apply historical data and models to the inbound event streams to compute assertions, such as identified anomalies or predicted occurrences of events constituting network error conditions. Further, VNA 133 may provide real-time alerting and reporting to notify a site or network administrator via admin device 111 of any predicted events, anomalies, trends, and may perform root cause analysis and automated or assisted error remediation. In some examples, VNA 133 of NMS 130 may apply machine learning techniques to identify the root cause of error conditions detected or predicted from the streams of network data 137. If the root cause may be automatically resolved, VNA 133 may invoke one or more corrective actions to correct the root cause of the error condition, thus automatically improving the underlying SLE metrics and also automatically improving the user experience.

Further example details of operations implemented by the VNA 133 of NMS 130 are described in U.S. Patent No. 9,832,082, issued November 28, 2017, and entitled "Monitoring Wireless Access Point Events," U.S. Publication No. US 2021/0306201, published September 30, 2021, and entitled "Network System Fault Resolution Using a Machine Learning Model," U.S. Patent No. 10,985,969, issued April 20, 2021, and entitled "Systems and Methods for a Virtual Network Assistant," U.S. Patent No. 10,958,585, issued March 23, 2021, and entitled "Methods and Apparatus for Facilitating Fault Detection and/or Predictive Fault Detection," U.S. Patent No. 10,958,537, issued March 23, 2021, and entitled "Method for Spatio-Temporal Modeling," and U.S. Patent No. 10,862,742, issued December 8, 2020, and entitled "Method for Conveying AP Error Codes Over BLE Advertisements," all of which are incorporated herein by reference in their entirety.

In addition, as illustrated in FIG. 1B, NMS 130 may include a NAC controller 138 that implements a NAC configuration platform that provides a user interface to create and assign access policies for client devices 148 of enterprise networks 106, and provides the appropriate enterprise-specific configuration information 139 to the respective NAC systems 180A-180K. NMS 130 may have a secure connection 184A-184K, e.g., a WebSocket or another secure tunnel, with each of NAC systems 180A-180K, respectively. Through secure connections 184, NAC controller 136 may receive network data 137, e.g., NAC event data, from each of NAC systems 180 and each of NAC systems 180 may download the appropriate configuration information 139 from NMS 130. In some examples, NAC controller 138 may log or map which enterprise networks are served by which of NAC systems 180. In addition, NAC controller 138 may monitor NAC systems 180 to identify failures of primary NAC systems and manage failovers to standby NAC systems.

NAC systems 180 provide network access control services in a control plane for one or more of NAS devices 108 at sites 102. In operation, NAC systems 180 authenticate client devices 148 to access wireless networks 106 and may perform fingerprinting to identify the client devices 148 and apply authorizations or access polices to the client devices 148 based on the identities. NAC systems 180 include multiple, geographically distributed points of presence. For example, NAC system 180A may comprise a first cloud-based system positioned within a first geographic region, e.g., U.S. East, NAC system 180B (not shown) may comprise a second cloud-based system positioned within a second geographic region, e.g., U.S. West, and NAC system 180K may comprise a k^{th} cloud-based system positioned within a k^{th} geographic region, e.g., China.

Deploying multiple NAC clouds at several geographic regions enables network access control services to be offered to nearby NAS devices with lower latency and high availability, while avoiding the processing limitations and maintenance issues experienced by on-premises NAC appliances. For example, NAS devices 108A within enterprise network site 102A may connect to the physically closest one of NAC systems, e.g., NAC system 180A, to experience lower latency for network access control services. In some examples, the physically closest one of NAC systems 180 may comprise a primary NAC system, and the NAS devices may also connect to a next closest one of NAC systems 180 as a standby NAC system in case of a failure of the primary NAC system. For example, NAS devices 108A within enterprise network site 102A may connect to both NAC system 180A and NAC system 108B (not shown), to experience high availability of network access control services.

In the example illustrated in FIG. 1B, each of the NAS devices 108, directly or indirectly, has a secure connection with at least one of NAC systems 180. For example, each of APs 142A within site 120A has a direct, secure connection 182A to NAC system 180A, e.g., a RadSec (RADIUS over Transport Layer Security (TLS)) tunnel or another encrypted tunnel. Each of switch 146A and router 147A within site 120A has an indirect connection to NAC system 180A via edge device 150A. In this example, switch 146A and router 147A may not support establishment of a secure connection directly with NAC system 180A, but edge device 150A may provide a proxy through which switch 146A and router 147A may connect to NAC system 180A. For example, each of switch 146A and router 147A have a direct connection 178A, e.g., a WebSocket, RADIUS, or other secure tunnel, to edge device 150A, and edge device 150A has a direct, secure connection 182A to NAC system 180A. Similarly, for site 102N, each of NAS devices 108N has an indirect connection to NAC system 180K via edge device 150N. In this example, APs 142N, switch 146N, and router 147N may not support establishment of a secure connection directly with NAC system 180K, but edge device 150N may provide a proxy through which NAS devices 108N may connect to NAC system 180K. For example, each of APs 142N, switch 146N, and router 147N have a direct connection 178N, e.g., a WebSocket, RADIUS, or other secure tunnel, to edge device 150N, and edge device 150N has a direct, secure connection 182N to NAC system 180K.

Through secure connections 182, NAC systems 180 may receive network access requests from client devices 148 through NAS devices 108 (and in some cases edge devices 150) at nearby sites 102. In response to the network access requests, NAC systems 180 authenticate the requesting client devices using an AAA server. NAC system 180 may perform fingerprinting to identify the authenticated client devices, such as in accordance with one or more aspects of the techniques described in this disclosure. NAC systems 180 then enforce the appropriate access policies on the identities of the authenticated client devices per the enterprise-specific configuration information 139 downloaded from NMS 130. In accordance with one specific implementation, a computing device is part of each of NAC systems 180. In accordance with other implementations, each of NAC systems 180A-180K may comprise one or more computing devices, dedicated servers, virtual machines, containers, services, or other forms of environments for performing the techniques described herein.

In accordance with the techniques described in this disclosure, NMS 130 may provide anomaly detection that improves network security for wired and/or wireless devices that use MAB authentication. For example, NMS 130 may include fingerprinting module 156 configured to obtain MAC address profiles of devices and anomaly module 166 configured to detect anomalies between MAC address profile. Anomaly module 166 may compare the MAC address profiles to detect anomalies, at least some of which may be indicative of MAC spoofing. NAC systems 180 may use the anomaly detection by NMS 130 to manage the authentication of devices and take appropriate action in response to the detection of MAC spoofing.

For example, when a new device, e.g., client devices 148 or NAS devices 108), initially requests access to the network, the device sends a network access request to NAC system 180A to authenticate the device. For example, client device 148A-1 may send a network access request to an access point (if client device 148A-1 is wireless) or switch 146A (if client device 148A-1 is wired to switch 146A), which then forwards the network access request to NAC system 180A to authenticate client device 148A-1.

In response to receiving the network access request, NAC system 180A may determine whether the device is a new device requesting access to the network (e.g., the MAC address specified in the network access request does not match a MAC address stored in NAC system 180A) and may obtain fingerprinting information, such as a current MAC address profile, of the client device and store the MAC address profile of the client device mapped to a MAC address of the client device. In some examples, NAC system 180A may request fingerprinting information from NMS 130 as part of processing an authentication request. NMS 130 may provide the fingerprinting information to NAC system 108A in response to the request.

Fingerprinting module 156 of NMS 130 may obtain fingerprinting information for a device. Fingerprinting module 156 may obtain information that includes one or more data attributes from devices via NAC systems 180 (e.g., via an agent executing on the device) and/or directly from other devices (e.g., DHCP server 116 and/or DNS server 112 as illustrated in FIG. 1A). In some examples, fingerprinting module 156 may obtain data for use in generating a MAC address profile associated with a MAC address of a device in response to receiving a request from NAC systems 180 (e.g., requested by NAC systems 180 as part of authorizing the device).

In some examples, client device 148 may implement DHCP and send DHCP packets specifying one or more DHCP options (e.g., such as in one or more Type-Length-Value (TLV) fields of the DHCP packet) that define the network services of the client devices. As one example, client device 148A-1 may include DHCP options information in a DHCP packet sent to DHCP server 116 on a path that includes at least one of NAS devices 108A capable of snooping the DHCP packet. In this example, in response to receiving an initial network access request for client device 148A-1 to access the network, fingerprinting module 156 of NAC system 180A may obtain the DHCP options information (e.g., receive a copy of the DHCP packet) sent by client device 148A-1. Fingerprinting module 156 may obtain the DHCP options information from one of NAS devices 108A that is in the path of the DHCP request sent by client device 148A-1. The one of NAS services 108A may snoop the DHCP request to glean the DHCP options information. Fingerprinting module 156 may store the DHCP options information mapped to a MAC address of client device 148A-1 in fingerprint info store 158 as a MAC address profile. Additional examples of DHCP options are described in S. Alexander, "DHCP Options and BOOTP Vendor Extensions," Network Working Group, Request for Comments 2132, March 1997, the entire contents of which is incorporated by reference herein.

In some examples, client device 148 may implement LLDP and send Link Layer Discovery Protocol (LLDP) packets specifying capabilities, identity, and other information of the client devices. The information specified in an LLDP packet may include a system name and description, port name and description, VLAN name and identifier, IP network management address, capabilities of the device, MAC address and physical layer information, power information, and/or link aggregation information. As one example, client device 148A-1 may include LLDP information in an LLDP packet sent to NAS devices 108. In this example, in response to receiving an initial network access request for client device 148A-1 to access the network, fingerprinting module 156 may obtain the LLDP information (e.g., receive a copy of the LLDP packet) sent by client device 148A-1. For example, fingerprinting module 156 may obtain the LLDP information from a NAS device that received the LLDP packet sent by client device 148A-1. Fingerprinting module 156 may store the LLDP information mapped to a MAC address of client device 148A-1 in fingerprint info store 158. Additional examples of LLDP are described in "IEEE Standards for Local and metropolitan area networks - Station and Media Access Control Connectivity Discovery," IEEE 802.1 AB-2005, May 06, 2005, the entire contents of which is incorporated by reference herein.

In some examples, client device 148 may implement Cisco^{™} Discovery Protocol (CDP) and send CDP packets specifying capabilities, identity, and other information of the device. The information specified in a CDP packet may include hardware platform, hardware capabilities, Layer 3 address (IP address) of the client device, interface that generated the CDP packet, port ID, device type, name of the client device, and other information of the client device. As one example, client device 148A-1 may include CDP information in a CDP packet sent to NAS devices 108. In this example, in response to receiving an initial network access request for client device 148A-1 to access the network, fingerprinting module 156 may obtain the CDP information (e.g., receive a copy of the CDP packet) sent by AP device 142A-1. Fingerprinting module 156 may store the CDP information mapped to a MAC address of AP device 142A-1 in fingerprint info store 158 for inclusion in a MAC address profile.

In some examples, client device 148 may implement HTTP and may send HTTP packets with an HTTP header used to identify the client devices and their capabilities, referred to as an "HTTP user agent." As one example, client device 148A-1 may include HTTP user agent information in an HTTP packet sent to one or more NAS devices 108. In this example, in response to receiving an initial network access request for client device 148A-1 to access the network, fingerprinting module 156 may obtain the HTTP user agent information (e.g., receive a copy of the HTTP packet) sent by client device 148A-1 and extract the HTTP user agent information from the HTTP packet. In some examples, fingerprinting module 156 may obtain the HTTP user agent information from the one or more NAS devices 108. Fingerprinting module 156 may store the HTTP user agent information mapped to a MAC address of client device 148A-1 in fingerprint info store 158. Additional examples of HTTP user agent are described in R. Fielding Ed., "Hypertext Transfer Protocol (HTTP/1.1): Semantics and Content," Internet Engineering Task Force (IETF), Request for Comments 7231, June 2014, the entire contents of which is incorporated by reference herein.

In some examples, fingerprinting module 156 may obtain location information associated with the device. In some examples, the location information may be different for a client device physically connected to a switch (referred to herein as "wired client device") and a client device wirelessly connected to an AP device (referred to herein as "wireless client device"). For example, assume that client device 148A-1 has a physical connection (e.g., Ethernet cable) to switch 146A, and is thus a "wired client device." In this example, fingerprinting module 156 may, in response to receiving an initial network access request for client device 148A-1 to access the network, obtain, e.g., from switch 146A, location information that specifies the port client device 148A-1 is connected to switch 146A. In this example, fingerprinting module 156 may store the location information (e.g., port) mapped to a MAC address of client device 148A-1 in fingerprint info store 158 for use in constructing a MAC address profile associated with a MAC address of client device 148A-1.

As another example, assume that client device 148A-N has a wireless connection to one or more of APs 142A-1 through 142A-M, and is thus a "wireless client device." In this example, fingerprinting module 156 may, in response to receiving an initial network access request for client device 148A-1 to access the network, obtain, e.g., from one or more of APs 142A-1 through 142A-M, location information that specifies a geolocation (e.g., coordinates) of client device 148A-N. The coordinates of client device 148A-N may be determined based on a triangulation of received signal strength indicator (RSSI) values detected from one or more of APs 142A-1 through 142A-M that detect a wireless signal from client device 148A-N. In some examples, fingerprinting module 156 may obtain the geolocation of client device 148A-N that were determined from NMS 130. Fingerprinting module 156 may store the location information (e.g., geolocation) mapped to a MAC address of client device 148A-N in fingerprint info store 158.

In some examples, fingerprinting module 156 may proactively obtain fingerprinting information for use in constructing a MAC address profile. For example, fingerprinting module 156 may perform a network mapper (NMAP) scan to identify used and/or unused ports of network devices to identify client devices connected to the network.

As further described below, NAC systems 180 may use information pushed from fingerprint info store 158 to authenticate client devices requesting access to the network. NMS 130 may push the information from fingerprint info store 158 to enable NAC system 180 to authenticate devices. For example, client device 149 of an unauthorized user 151 may spoof a MAC address of client device 148A-1 or one of NAS devices 108A and sends a network access request to gain access to the network. NAC system 180A may receive a network access request for client device 149 that has the same MAC address as client device 148A-1. In this example, NMS 130 may determine that client device 149 is not a new device (e.g., has a recognized MAC address) based on a comparison of a current MAC address profile to a historical MAC address profile, and in response, determine whether the MAC address profiles are anomalous in such a way that is indicative of MAC spoofing. Based on the detection of an anomaly indicative of MAC spoofing, NMS 130 may may push a consolidated MAC address profile to NAC system 180A for policy manager 144 to enforce an appropriate policy action (e.g., revoking access for client device 149 and/or quarantining client device 149).

Fingerprinting module 156 may perform a lookup of known MAC address profiles associated with a MAC address of device (e.g., concurrent and/or historical MAC address profiles). Fingerprinting module 156 may search fingerprint info store 158 for MAC address profiles associated with a device. For example, fingerprinting module 156 may search by MAC address to determine whether fingerprint info store includes a known MAC address profile associated with the MAC address.

Anomaly module 166 may compare a known MAC address profile against a current MAC address profile of client device 149 and determine whether there are anomalies between the current MAC address profile of client device 149 and a known MAC address profile(s) of client device 148A-1 stored in fingerprint info store 158. In some examples, anomaly module 166 may determine whether DHCP options information of client device 149 match DHCP options information of client device 148A-1. Alternatively, or additionally, anomaly module 166 may determine whether LLDP information of client device 149 matches LLDP information of client device 148A-1. Alternatively, or additionally, anomaly module 166 may determine whether CDP information of client device 149 matches CDP information of client device 148A-1. Alternatively, or additionally, anomaly module 166 may determine whether HTTP user agent information of client device 149 matches HTTP user agent information of client device 148A-1. Alternatively, or additionally, anomaly module 166 may determine if there are any anomalies between location information of client device 149 and location information of client device 148A-1. For example, if client device 148A-1 is a wired client device, anomaly module 166 may determine if the port identifier of client device 149 is different than the port identifier of client device 148A-1. As another example, if client device 148A-1 is a wireless client device, anomaly module 166 may determine if the geolocation of client device 149 is different than the geolocation of client device 148A-1 or different than the expected geolocation of client device 148A-1 based on a mobility pattern of client device 148A-1. For example, NMS 130 may include an Artificial Intelligence (AI) engine to analyze location information to identify a mobility pattern of a wireless client device. Anomaly module 166 may use the mobility pattern to determine whether the geolocation of a client device is to be expected.

Anomaly module 166 determines whether there is an anomaly between a current MAC address profile and a known MAC address profile. Anomaly module 166 may consider location information between MAC address profiles in the determination of whether there is an anomaly between MAC address profiles. Anomaly module 166 may determine one or more types of anomalies between MAC address profiles, such as mismatched information between the MAC address profiles. Additionally, or alternatively, anomaly module 166 may determine that the existence of a concurrent MAC address profile associated with a MAC address of a device is indicative of MAC spoofing (e.g., that two devices with the same MAC address are connected at two different physical locations at the same time).

Anomaly module 166 may detect anomalies between a current MAC address profile and a concurrent MAC address profile, where the concurrent MAC address profile is associated with the same MAC address but at a different location from the device of the current MAC address profile. In an example, anomaly module 166 detects an anomaly between a current MAC address profile of client device 149 and a concurrent MAC address profile associated with client device 148A-1, where client device 148A-1 is associated with the same MAC address as client device 149.

NMS 130 may provide an indication of the detection of an anomaly to NAC systems 180. For example, NMS 130 may push fingerprinting information to NAC systems 180, where the fingerprinting information includes an indication of an anomaly associated with a MAC address. Based on the detection of an anomaly between the MAC address profiles, policy manager 144 of NAC systems 180 executes an access policy that specifies whether to permit or deny network access for client device 149. Policy manager 144 executes the access policy and denies access for client device 149. Policy manager 144 may execute an access policy that denies access for client device 149 based on NMS 130 determining that an anomaly associated with a MAC address of client device 149 is indicative of MAC spoofing. In some examples, an administrator may configure one or more access policies and associated policy assignment criteria. For example, an administrator may configure an access policy to deny client device 149 access to the network in response to determining any of the DHCP options information, LLDP information, CDP information, and/or HTTP user agent information deviates from a concurrent or historical MAC address profile of a client device stored in fingerprint info store 158 and is indicative of MAC spoofing. Alternatively, the administrator may configure an access policy to quarantine the client device's access to a quarantine VLAN or another less privileged VLAN to restrict access of the client device in response to determining any of the DHCP options information, LLDP information, CDP information, and/or HTTP user agent information deviates from a concurrent or historical MAC address such that the deviation is indicative of MAC spoofing. NMS 130 may refrain from sending a notification based on having determined that an anomaly is legitimate. For instance, NMS 130 may refrain sending a notification or a change in authentication to NAC systems 180 based on determining that an anomaly is legitimate.

In some examples, policy manager 144 may generate and send a notification to the administrator based on the implemented access policy. For instance, policy manager 144 may generate and send a notification if policy manager 144 implements an access policy to deny or quarantine a client device's access to the network (e.g., based on a determination that an anomaly associated with a MAC address profile of the client device is indicative of MAC spoofing). In some examples, the notification may include an indication of a severity level of the unauthorized client device's attempt to access the network. While discussed in the context of NMS 130, one or more of NAC systems 180 may perform the techniques of this disclosure. Further examples details regarding the fingerprinting of client devices are described in U.S. Patent Publication No. US 2024/0179168, published May 30, 2024, and entitled "Network Access Anomaly Detection and Mitigation", the contents of which is incorporated herein by reference in its entirety.

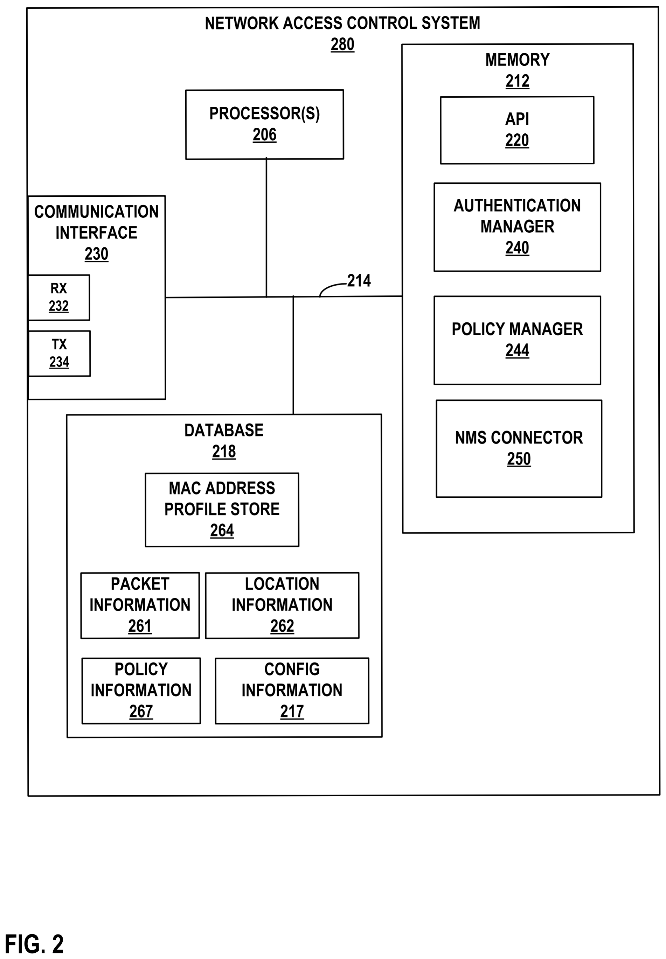

FIG. 2 is a block diagram of an example network access control (NAC) system 280, in accordance with one or more techniques of the disclosure. NAC system 280 may be used to implement, for example, any of NAC systems 180 in FIGS. 1A, 1B. In such examples, NAC system 280 is responsible for authenticating and authorizing one or more client devices 148 to access wireless networks 106 at a sub-set of nearby sites 102A-102N.

NAC system 280 includes a communications interface 230, one or more processor(s) 206, a user interface 210, a memory 212, and a database 218. The various elements are coupled together via a bus 214 over which the various elements may exchange data and information. In some examples, NAC system 280 receives network access requests from one or more of client devices 148 through NAS devices 108 (and in some cases edge devices 150) at the sub-set of nearby sites 102 from FIGS. 1A, 1B. In response to the network access requests, NAC system 280 authenticates the requesting client devices. In some examples, NAC system 280 enforces appropriate access policies on the authenticated client devices in accordance with enterprise-specific configuration information 217 downloaded from NMS 130 from FIGS. 1A, 1B. In some examples, NAC system 280 may be part of another server shown in FIGS. 1A, 1B or a part of any other server.

Processor(s) 206 execute software instructions, such as those used to define a software or computer program, stored to or provided by a computer-readable storage medium (such as memory 212), such as computer-readable mediums including a storage device (e.g., a disk drive, or an optical drive) or a memory (such as Flash memory or RAM) or a transmission medium (such as bus 214 and/or communications interface 230) or any other type of volatile or non-volatile memory, that stores and/or conveys instructions to cause the one or more processors 306 to perform the techniques described herein.

Communications interface 230 may include, for example, an Ethernet interface. Communications interface 230 couples NAC system 280 to a network and/or the Internet, such as any of network 134 as shown in FIG. 1A and/or any local area networks. Communications interface 230 includes a receiver 232 and a transmitter 234 by which NAC system 280 receives/transmits data and information to/from any of APs 142, switches 146, routers 147, edge devices 150, NMS 130, or servers 116, 122, 128 and/or any other network nodes, devices, or systems forming part of network system 100 such as shown in FIGS. 1A, 1B.

The data and information received by NAC system 280 may include, for example, configuration information 217 associated with one or more of sites 102 that is downloaded from NMS 130. Configuration information 217 may include enterprise-specific NAC configuration information, including access policies and associated policy assignment criteria. For example, configuration information 217 may define certain virtual local area networks (VLANs), access control lists (ACLs), registration portals, or the like, associated with certain categories of client devices. Configuration information 217 may further define, for each of the different categories of the client devices, different types of tracking, different types of authorization, and/or different levels of access privileges. In addition, the data and information received by NAC system 280 may include identification information of client devices 148 from NAS devices 108 that is used by NAC system 280 to perform fingerprinting of the end user devices in order to enforce the access policies as defined in policy information 261. Database 218 may include DHCP options used to request IP addresses, information specified in LLDP packets, information specified in CDP packets, HTTP user agent information, location information, and/or device type and operating system information. NAC system 280 may further transmit data and information via communications interface 330 to NMS 130 including, for example, NAC event data, which may be used by NMS 130 to remotely monitor the performance of NAC system 280.

Database 218 includes MAC address profile store 264, which may be a data repository or other type of data structure that includes MAC address profiles. NAC 280 may store MAC address profiles received from NMS 130 and/or other devices in MAC address profile store 264 for use in determining authorization for client devices. In an example, NAC 280 receives a MAC address profile associated with the MAC address of a client device generated using fingerprint information. NAC 280 stores the MAC address profile in MAC address profile store 264.

Memory 212 includes one or more devices configured to store programming modules and/or data associated with operation of NAC system 280. For example, memory 212 may include a computer-readable storage medium, such as a non-transitory computer-readable medium including a storage device (e.g., a disk drive, or an optical drive) or a memory (such as Flash memory or RAM) or any other type of volatile or non-volatile memory, that stores instructions to cause the one or more processor(s) 206 to perform the techniques described herein.

In this example, memory 212 includes an API 220, an authentication manager 240, a policy manager 244, and an NMS connector 250. NAC system 280 may also include any other programmed modules, software engines and/or interfaces configured for authentication and authorization of client devices 148.

Authentication manager 240 enables authentication of client devices 148 at NAS devices 108 to access wireless networks 106, such as branch or campus enterprise networks, at the sub-set of sites 102 in communication with NAC system 280. Authentication manager 240 may perform the functionality of an AAA server, e.g., a RADIUS server, or provide access to an AAA server to authenticate client devices 148 prior to providing access to the enterprise networks 106 via the NAS devices 108. In some examples, authentication manager 240 may participate in a handshake exchange between a client device, an NAS device, and NAC system 280 controlling access at the NAS device. In other examples, authentication manager 240 may enable certificate-based authentication of client devices or enable interaction with cloud directory services to authenticate the client devices.

Policy manager 244 may be an instance of policy manager 144 as illustrated in FIGS. 1A-1B and provide similar functionality. Policy manager 224 enables enforcement of the authorizations or access policies based on the identities or categorizations of the authenticated client devices. For example, policy manager 244 may assign the authenticated client devices to certain VLANs, apply certain ACLs, direct the client devices to certain registration portals, or the like, that are each associated with different types of tracking, different types of authorization, and/or different levels of access privileges in accordance with configuration information 217 for the corresponding enterprise of the client devices. Policy manager 224 may use a MAC address profile provided by an NMS to determine a type of authorization for a device in accordance with one or more policies specified in policy information 267. In some examples, after a client device gains access to the enterprise network, policy manger 244 may monitor activities of the client device to identify security concerns and, in response, re-assign the client device to a quarantine VLAN or another less privileged VLAN to restrict access of the client device.

Database 218 includes policy information 267, which may be a data repository or other type of data structure that includes policy information. Policy information 267 may include information specifying policies for authorization of devices by NAC 280. For example, policy information 267 may include a policy specifying levels of authorization based on fingerprint information associated with a device.

NMS connector 250 manages the data and information exchanged between NAC system 280 and NMS 130, e.g., via a WebSocket of another secure tunnel 184, as shown in FIG. 1B. NMS connector 250 may maintain a log or mapping of which enterprise networks are served by NAC system 280 and the corresponding configuration information 217 for those enterprises. NMS connector 250 may also manage any updates or modifications to configuration information 217 received from NMS 130.

NMS connector 250 may receive notifications or indications from NMS 130 of anomalies associated with MAC addresses of a device. NMS connector 250 may receive MAC address profiles and other fingerprinting information and store the MAC address profile in MAC address profile store 264.

In some examples, NAC system 280 obtains a current profile of a MAC address associated with a device after granting access using a default access profile. NAC system 280 may grant access to a network at a site (e.g., one of sites 102 as illustrated in FIGS. 1A-1B) using a default access policy when a device first requests access to a network. NAC system 280 may obtain a MAC address profile associated with a device that has been granted access using a default policy when determining whether to grant access using a different and more permissive access policy than the default access policy. In an example, NAC system 280 authenticates a device using a default access policy in response to receiving an access request from the device. NAC system 280 obtains a MAC address profile of the device from NMS 130 as part of further authenticating the device.

NAC system 280 may use the information in database 218 (e.g., MAC address profile store 264) to authenticate client devices requesting access to the network. For example, in response to NAC system 280 receiving a subsequent network access request for a client device (e.g., client device 149), NAC system 280 may obtain fingerprinting information of the associated with the subsequent network access request. NAC system 280 may determine whether the client device associated with the subsequent network access request is a new client device that is requesting access to the network, e.g., by determining whether the MAC address of the client device requesting for access is known. In response to determining that the client device is not a new client device, NAC system 280 may perform a lookup of the fingerprinting information of the client device associated with the subsequent network access request against the previously obtained fingerprinting information of the client device associated with the prior network access request in database 218. For instance, NAC systems 280 may perform a lookup of fingerprinting information of a client device to determine that the client device is not new and/or is using a known MAC address (e.g., that a MAC address profile store in MAC address profile store 264 includes a MAC address profile associated with the MAC address of the client device).

Policy manager 244 may determine a level of authorization for a device based on a MAC address profile received via NMS connector 250. Policy manager 244 may compare the MAC address profile to one or more authorization policies specified in policy information 267 and determine a level of authorization. Policy manager 244 may determine to revoke authorization for a device based on a MAC address profile that indicative of MAC spoofing by the device. In some examples, policy manager 224 may determine a level of authorization based on an indication from an NMS that a device should be reauthorized based on a different profile and/or that the device should be quarantined (e.g., when MAC spoofing is detected).

Although the techniques of the present disclosure are described in this example as performed by NMS 130, techniques described herein may be performed by any other computing device(s), system(s), and/or server(s), and that the disclosure is not limited in this respect. One or more computing device(s) configured to execute the functionality of the techniques of this disclosure may reside in a dedicated server or be included in any other server in addition to or other than NMS 130, or may be distributed throughout network 100, and may or may not form a part of NMS 130. For instance, NAC system 280 may be configured to provide at least some of the functionality of NMS 130.

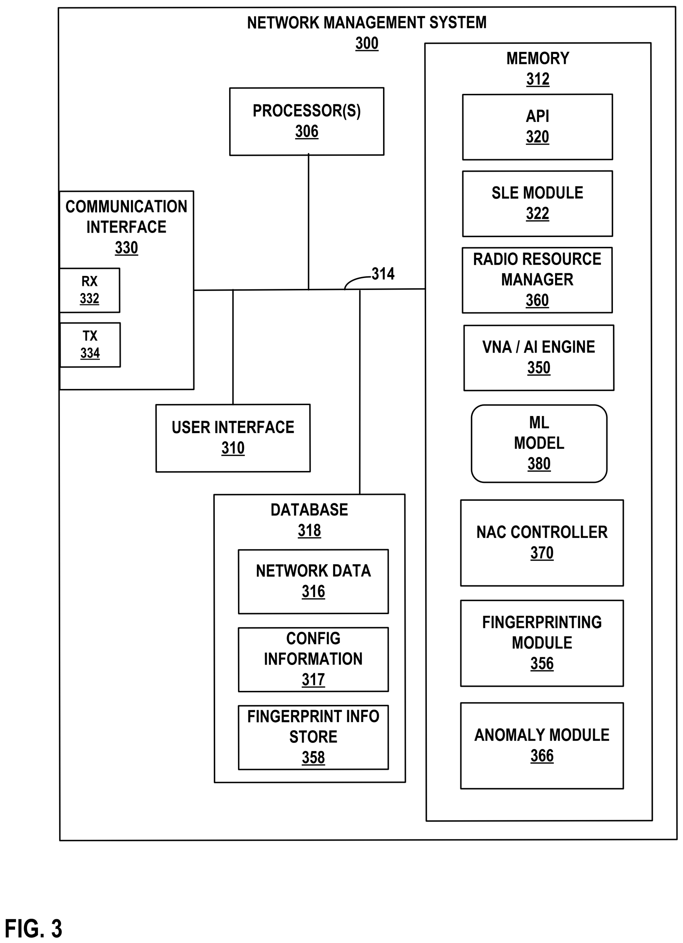

FIG. 3 is a block diagram of an example network management system (NMS) 300, in accordance with one or more techniques of the disclosure. NMS 300 may be used to implement, for example, NMS 130 in FIGS. 1A, 1B. In such examples, NMS 300 is responsible for monitoring and management of one or more wireless networks 106A-106N at sites 102A-102N, respectively.

NMS 300 includes a communications interface 330, one or more processor(s) 306, a user interface 310, a memory 312, and a database 318. The various elements are coupled together via a bus 314 over which the various elements may exchange data and information. In some examples, NMS 300 receives data from one or more of client devices 148, APs 142, switches 146, routers, 147, edge devices 150, NAC systems 180, and other network nodes within network 134, e.g., routers and gateway devices, which may be used to calculate one or more SLE metrics and/or update network data 316 in database 318. NMS 300 analyzes this data for cloud-based management of wireless networks 106A-106N. In some examples, NMS 300 may be part of another server shown in FIG. 1A or a part of any other server.

Processor(s) 306 execute software instructions, such as those used to define a software or computer program, stored to or provided by a computer-readable storage medium (such as memory 312), such as computer-readable mediums including a storage device (e.g., a disk drive, or an optical drive) or a memory (such as Flash memory or RAM) or a transmission medium (such as bus 314 and/or communications interface 330) or any other type of volatile or non-volatile memory, that stores and/or conveys instructions to cause the one or more processors 306 to perform the techniques described herein.

Communications interface 330 may include, for example, an Ethernet interface. Communications interface 330 couples NMS 300 to a network and/or the Internet, such as any of network(s) 134 as shown in FIG. 1A, and/or any local area networks. Communications interface 330 includes a receiver 332 and a transmitter 334 by which NMS 300 receives/transmits data and information to/from any of client devices 148, APs 142, switches 146, routers 147, edge devices 150, NAC systems 180, servers 116, 122, 128 and/or any other network nodes, devices, or systems forming part of network system 100 such as shown in FIG. 1A. In some scenarios described herein in which network system 100 includes "third-party" network devices that are owned and/or associated with different entities than NMS 300, NMS 300 does not directly receive, collect, or otherwise have access to network data from the third-party network devices. In some examples, an edge device, such as edge devices 150 from FIGS. 1A, 1B, may provide a proxy through which the network data of the third-party network devices may be reported to NMS 300.

The data and information received by NMS 300 may include, for example, telemetry data, SLE-related data, or event data received from one or more of client devices 148, APs 142, switches 146, routers 147, edge devices 150, NAC systems 180, or other network nodes, e.g., routers and gateway devices, used by NMS 300 to remotely monitor the performance of wireless networks 106A-106N and application sessions from client device to cloud-based application server. NMS 300 may further transmit data via communications interface 330 to any of the network devices, such as client devices 148, APs 142, switches 146, routers 147, edge devices 150, NAC systems 180, or other network nodes within network 134, to remotely manage wireless networks 106A-106N and portions of the wired network.

Memory 312 includes one or more devices configured to store programming modules and/or data associated with operation of NMS 300. For example, memory 312 may include a computer-readable storage medium, such as a non-transitory computer-readable medium including a storage device (e.g., a disk drive, or an optical drive) or a memory (such as Flash memory or RAM) or any other type of volatile or non-volatile memory, that stores instructions to cause the one or more processor(s) 306 to perform the techniques described herein.

In this example, memory 312 includes an API 320, an SLE module 322, a virtual network assistant (VNA)/AI engine 350, a radio resource management (RRM) engine 360, and a NAC controller 370. NMS 300 may also include any other programmed modules, software engines and/or interfaces configured for remote monitoring and management of wireless networks 106A-106N and portions of the wired network, including remote monitoring and management of any of APs 142, switches 146, routers 147, edge devices 150, NAC systems 180, or other network devices, e.g., routers and gateway devices.

SLE module 322 enables set up and tracking of thresholds for SLE metrics for each of wireless networks 106A-106N. SLE module 322 further analyzes SLE-related data collected by, e.g., APs, such as any of APs 142 from UEs in each wireless network 106A-106N. For example, APs 142A-1 through 142A-N collect SLE-related data from UEs 148A-1 through 148A-N currently connected to wireless network 106A. APs 142A-1 through 142-N transmit this data to NMS 300, which executes by SLE module 322 to determine one or more SLE metrics for each UE 148A-1 through 148A-N currently connected to wireless network 106A. One or more of APs 142A-1 through 142-N transmit this data, in addition to any network data collected by one or more APs 142A-1 through 142A-N in wireless network 106A, to NMS 300 for NMS 300 to store as, for example, network data 316 in database 318.

RRM 360 monitors one or more metrics for each site 102A-102N in order to learn and optimize the RF environment at each site. For example, RRM 360 may monitor the coverage and capacity SLE metrics for a wireless network 106 at a site 102 in order to identify potential issues with SLE coverage and/or capacity in the wireless network 106 and to make adjustments to the radio settings of the access points at each site to address the identified issues. For example, RRM 360 may determine channel and transmit power distribution across all APs 142 in each of wireless network 106A-106N. For example, RRM 360 may monitor events, power, channel, bandwidth, and number of clients connected to each AP. RRM 360 may further automatically change or update configurations of one or more APs 142 at a site 102 with an aim to improve the coverage and capacity SLE metrics and thus to provide an improved wireless experience for the user. In some examples, RRM may determine geolocation of a wireless client device, e.g., by triangulating the location of the client device based on RSSI values obtained from one or more APs 142.

VNA/AI engine 350 analyzes data received from network devices as well as its own data to identify when undesired to abnormal states are encountered at one of the network devices. For example, VNA/AI engine 350 may identify the root cause of any undesired or abnormal states, e.g., any poor SLE metric(s) indicative of connected issues at one or more network devices. In addition, VNA/AI engine 350 may automatically invoke one or more corrective actions intended to address the identified root cause(s) of one or more poor SLE metrics. In some examples, ML model 380 may comprise a supervised ML model that is trained, using training data comprising pre-collected, labeled network data received from the network devices. The supervised ML model may comprise one of a logistical regression, naive Bayesian, support vector machine (SVM), or the like. In other examples, ML model 380 may comprise an unsupervised ML model. Although not shown in FIG. 3, in some examples, database 318 may store the training data and VNA/AI engine 350 or a dedicated training module may be configured to train ML model 380 based on the training data to determine appropriate weights across the one or more features of the training data. For example, database 318 may store geolocation data of client devices to train ML model 380 based on the training data to determine a mobility pattern of the client devices. VNA/AI engine 350 may provide an indication of whether or not geolocation information of a client device is within the mobility pattern.

Examples of corrective actions that may be automatically invoked by VNA/AI engine 350 may include, but are not limited to, invoking RRM 360 to reboot one or more APs, adjusting/modifying the transmit power of a specific radio in a specific AP, adding SSID configuration to a specific AP, changing channels on an AP or a set of APs, etc. The corrective actions may further include restarting a switch and/or a router, invoking downloading of new software to an AP, switch, or router, etc. These corrective actions are given for example purposes only, and the disclosure is not limited in this respect. If automatic corrective actions are not available or do not adequately resolve the root cause, VNA/AI engine 350 may proactively provide a notification including recommended corrective actions to be taken by IT personnel, e.g., a site or network administrator using admin device 111, to address the network error.

NAC controller 370 implements a NAC configuration platform that provides user interface 310 for display to an enterprise network administrator, e.g., via admin device 111 of FIG. 1A, through which to receive access policy information for the enterprise network. NAC controller 370 creates enterprise-specific configuration information 317 stored in database 318 based on the input received via user interface 310. Configuration information 317 may include NAC configuration information for one or more enterprise networks managed by NMS 300. For each enterprise, configuration information 317 may including access policies and associated policy assignment criteria. For example, configuration information 317 may define certain VLANs, ACLs, registration portals, or the like, associated with certain categories of client devices, and may further define, for each of the different categories of the client devices, different types of tracking, different types of authorization, and/or different levels of access privileges. Configuration information 317 may be substantially similar to configuration information 139 of FIG. 1B.

NAC controller 370 manages the data and information exchanged between NMS 300 and NAC systems 180, e.g., via a WebSocket or other secure tunnel 184, as shown in FIG. 1B. NAC controller 370 may maintain a log or mapping of which enterprise networks are served by which of NAC systems 180 and the corresponding configuration information 317 for those enterprises. NAC controller 370 may also manage any updates or modifications to configuration information 317 to be pushed down to NAC systems 180. In addition, NAC controller 370 may monitor NAC systems 180 to identify failures of primary NAC systems and manage failovers to standby NAC systems.

NAC controller 370 may create configuration information 317 that defines one or more access policies based on fingerprint information. For example, NAC controller 370 may receive input via user interface 310 specifying access policy information to deny a client device's access to the network if there is an anomaly between fingerprinting information of a client device associated with a subsequent network access request and fingerprinting information of a client device associated with a prior network access request. The configuration information may define a quarantine VLAN or another less privileged VLAN to restrict access of a client device if there is an anomaly between fingerprinting information of a client device associated with a subsequent network access request and fingerprinting information of a client device associated with a prior network access request. In some examples, NAC controller 370 may receive input via user interface 310 specifying access policy information to permit a client device's access to the network if there is an anomaly between geolocation information of a wireless client device associated with a subsequent network access and geolocation information of a wireless client device associated with a prior network access request, and the geolocation information is determined to be within a mobility pattern of the wireless client device associated with the prior network access request. In some examples, NAC controller 370 may receive input via user interface 310 specifying access policy information to deny a client device's access to the network if there is an anomaly between geolocation information of a wireless client device associated with a subsequent network access request and geolocation information of a wireless client device associated with a prior network access request, and the geolocation information is determined to be not within the mobility pattern of the wireless client device associated with the prior network access request. NAC controller 370 may push the configuration information 317 including the one or more access policies down to NAC systems 180, which in turn may use the configuration information to configure the NAC system to implement the one or more access policies based on fingerprinting information.

In some examples, NAC controller 370 may receive input via user interface 310 specifying configuration information 317 to configure NAC systems 180 to generate and send a notification to the administrator based on the implemented access policy. For instance, configuration information 317 may include configuration information to configure fingerprinting module 156 to generate and send a notification if fingerprinting module 156 implements an access policy to deny or quarantine a client device's access to the network. In some examples, the notification may include an indication of a severity level of the unauthorized client device's attempted access to the network.

NMS 300 may receive notifications generated by a NAC system, such as one or more of NAC systems 180 as illustrated in FIGS. 1A-1B. NAC systems 180 may generate a notification identifying an anomaly detected between MAC address profiles of a client device (e.g., current, historical, concurrent MAC address profiles associated with the MAC address of the client device) and provide the notification to NMS 300. NMS 300 may process the notification and determine one or more actions to take based on the notification.

NMS 300 may take one or more actions based on receiving a notification or an indication of an event from one or more of NAC system 180. NMS 300 make take one or more actions, such as generating an instance of user interface 310 as including a visual indication of the notification, instructing a NAC system to revoke access for a client device, and/or other actions. In an example, NMS 300 receives a notification from NAC system 180A that includes an indication that a client device is MAC spoofing, an identifier of the client device, information supporting a determination that the client device is MAC spoofing, and other information. NMS 300 determines that an administrator should be alerted to a notification that a client device is MAC spoofing. NMS 300 generates an instance of user interface 310 that includes the information included in the notification received from NAC system 180A and outputs the user interface via a web browser.

In accordance with the techniques described in this disclosure, NMS 300 may compare MAC address profiles of a MAC address associated with a device to detect anomalies. Fingerprinting module 356 of NMS 300 may obtain a current profile of a MAC address. Anomaly module 366 may compare the current profile to one or more historical profiles and/or a concurrent MAC address profile. NMS 300 may detect one or more anomalies between the current MAC address profile and the other MAC address profiles (e.g., concurrent, historical profiles) and generate a notification identifying the anomaly.

Fingerprinting module 356 may obtain a current profile of a MAC address associated with a device requesting access to a network at a location. As part of obtaining current a MAC address profile, fingerprinting module 356 may obtain data attributes of the device associated with the MAC address for inclusion in a current or consolidated MAC address profile from a variety of sources that include DHCP servers, the devices themselves, instances of NAC systems 180, and/or other sources. Fingerprinting module 356 may obtain data attributes from both relatively high-confidence sources and data attributes from relatively low-confidence sources. An administrator, NMS 130, and/or another entity may assign confidence scores or labels to types of sources. In an example, fingerprinting module 356 receives an indication of a request to authenticate a client device from a NAC system.. Fingerprinting module 356 aggregates obtained data attributes into a current MAC address profile of the client device as part of constructing a current MAC address profile of the client device.

Fingerprinting module 356 may aggregate data from multiple sources to construct detailed client profiles. Fingerprinting module 356 may obtain data from sources that include: user agents and MAC Organizationally Unique Identifier (OUI), where user agent strings provide device family, model, and OS information, while MAC OUI mappings identify manufacturers; DHCP Options (55/60) that may be extracted from request payloads and that provide OS and vendor details via mappings from a static database; via an SDK that offers accurate and detailed device attributes directly from a client; from LLDP packets that provide additional neighbor information from managed switches and routers; from Mobile Device Management (MDM) systems that supply device-related information polled from integrated Mobile Device Management systems; and/or from other sources. Fingerprint module 356 may aggregate the data from one or more of the sources as part of constructing a fingerprint and/or MAC address profile.

Fingerprinting module 356 may construct a consolidated fingerprint or MAC address profiles by merging data from one or more sources. Fingerprinting module 356 may include data attributes that include general category of device type (e.g., laptop, printer, etc.); device model and OS attributes that include specific identification of version and type of device model and/or OS; a manufacturer attribute based on MAC OUI and/or other identifiers; an Operating System and version attribute that identifies the operation system and version running on the client's device; an IP address associated with the client; metadata that includes Organization ID, site ID, and Timestamp (creation, update) of the fingerprint and/or MAC address profile and/or other types of attributes. For example, fingerprinting module 356 may construct a consolidated fingerprint that includes one or more attributes based on aggregated data from multiple sources.

Fingerprinting module 356 may obtain a current MAC address profile by obtaining data attributes associated with the MAC address (or, by extension the device associated with the MAC address) from one or more sources. Fingerprinting module 356 may collect data attributes from sources that include DHCP servers (e.g., DHCP server 116 as illustrated in FIG. 1A), DNS servers (e.g., DNS server 112 as illustrated in FIG. 1A), NAC systems, neighboring devices of the device (e.g., LLDP data), and/or sources of data. Fingerprinting module 356 may construct the current MAC address profile using the collected data attributes and by aggregating the collected attributes. For example, fingerprinting module 356 may construct current MAC address profiles by aggregating data attributes into a data construct or other type of record that includes the data attributes.

Fingerprinting module 356 may store current MAC address profiles in fingerprint info store 358, which may be a data repository, database, and/or other type of data storage used to retain MAC address profiles (e.g., historical and/or concurrent MAC address profiles). Fingerprinting module 356 may store current MAC address profiles in fingerprint info store 358 for use as historical MAC address and/or concurrent MAC address.

Fingerprinting module 356 may obtain a concurrent MAC address profile associated with a MAC address of a client device. Fingerprinting module 356 may obtain a current MAC address profile by performing a lookup within fingerprint info store 358, where the concurrent MAC address profile is a MAC address profile associated with the MAC address of the device at a different site from the current MAC address profile. For example, fingerprinting module 356 may obtain a concurrent MAC address profile associated with the MAC address of a client device for use in detecting anomalies (e.g., if a comparison of a current MAC address to a concurrent MAC address is indicative of a client device being connected to more than site for greater than a transient period of time, that may be indicative of MAC spoofing or other malicious activity by a device).

Anomaly module 366 may compare a current MAC address profile to historical MAC address profiles and/or concurrent MAC address profiles. Anomaly module 366 may compare the MAC address profiles to identify one or more types of anomalies between the MAC address profiles. Anomaly module 366 may compare the MAC address profiles in one or more ways, such as directly comparing attributes of the MAC address profiles, applying machine learning or AI models to the MAC address profiles, and/or other ways. For example, anomaly module 366 may apply an ML model to the MAC address profiles to identify anomalies that may not be identifiable solely through direct comparisons of attributes.

Anomaly module 366 may implement a detection mechanism that revolves around tracking changes in fingerprints (e.g., MAC address profiles) over time. Anomaly module 366 may implement a mechanism that enables temporal analysis that includes comparing the fingerprint of a given MAC address at different points in time to identify significant changes; source reliability prioritization that includes prioritizing high-confidence sources over comparatively less reliable ones; group consistency analysis that includes evaluating changes at the group level (e.g., printer group level) to identify blast radius scenarios where a minor software update could explain anomalies across multiple devices, and/or other mechanisms. For example, anomaly module may implement a mechanism to facilitate detection of MAC anomalies by in part evaluating group-level changes to determine if a change is experienced by other devices in a same group and therefore less likely to be indicative of MAC spoofing.

In some examples, anomaly module 366 services incoming device data and outputs consolidated fingerprints to a Kafka topic. By monitoring this stream, the detection logic of anomaly module 366 may enable one or more types of functionality that include individual profiling where anomaly module 366 may track the historical profile of each MAC address and detect sudden changes in key attributes such as device type, OS, or manufacturer. For example, anomaly module 366 may detect a shift from "printer" to "Linux machine" is flagged as anomalous. The detection logic of anomaly module 366 may perform cross-source correlation., where anomaly module 366 validates profiles across multiple data sources. Anomaly module may identify inconsistent data (e.g., DHCP indicates a printer while LLDP suggests a Linux device) that raises suspicions of spoofing. The detection logic of anomaly module 366 may perform group analysis, where anomaly module 366 may analyze the behavior of similar devices. For instance, if 100 printers are profiled, but only 5 show significant deviations, anomaly module 366 may determine that the 5 printers are likely spoofed. Conversely, anomaly module 366 may determine that changes across all devices indicate a legitimate update.

Anomaly module 366 may detect an anomaly between a current MAC address profile and a known MAC address profile (e.g., at least a historical MAC address profile or a concurrent MAC address profile). Anomaly module 366 may detect one or more types of anomalies that include mismatches between data attributes, a device connected to a network via more than subnet (e.g., a first instance of a device connected to a first subnet and a second instance of a device connected to a second subnet), a device connected to networks at more than one location (e.g., device connected to networks at both site 102A and site 102N), changes in device type (e.g., a device with the same MAC address being classified as a different type of device over time), a device behaving in a way inconsistent with that of the type of the device (e.g., exhibiting behaviors not associated with the type of the device), and/or other types of anomalies. In an example, anomaly module 366 compares a current MAC address profile of laptop to a historical MAC address profile of the laptop. Anomaly module 366 determines that there is an anomaly of a mismatch in DHCP information between the current MAC address profile and a historical MAC address profile.

In some examples, anomaly module 366 may validate a current MAC address profile based on detecting an anomaly. Anomaly module 366 may validate the current MAC address profile to determine whether an anomaly is consistent with MAC spoofing or is an innocuous anomaly (e.g., an anomaly inconsistent with malicious activity). Anomaly module 366 may validate a current MAC address profile by comparing one or more data attributes from multiple data sources. For example, anomaly module 366 may compare an attribute indicated by a first data source with the same attribute indicated by a second source to determine whether data for the attribute is inconsistent between the sources. Anomaly module 366 may compare attributes between data sources as inconsistent data between sources may be indicative of MAC spoofing by a device.

As part of comparing an attribute using multiple sources, anomaly module 366 may select sources based on predetermined confidence levels for the sources. Anomaly module 366 may select a comparatively high-confidence source as the first data source and one or more comparatively low-confidence sources as second data sources. Anomaly module 366 may compare data attributes between the comparatively high-confidence sources and the same data attributes from the comparatively low-confidence sources. For example, anomaly module 366 may select a source with a relatively high confidence level and a source with a relatively low confidence level (e.g., a comparatively less reliable source) for use in comparing attributes of a current MAC address profile.

Anomaly module 366 may use blast radius consideration when determining whether an anomaly is indicative of MAC spoofing and/or other undesirable or potentially malicious activity. Anomaly module 366 may detect spoofing by distinguishing between genuine anomalies and systemic changes affecting multiple devices. Anomaly module 366 may apply one or more considerations that include localized changes where a small subset of devices showing profile changes increases the likelihood of spoofing, widespread changes where uniform changes across a device group may indicate legitimate firmware or software updates, reducing the likelihood of spoofing and/or other considerations. By analyzing both individual and group-level behaviors, anomaly module 366 may achieve a balance between sensitivity to anomalies and minimizing false positives.

Anomaly module 366 may determine whether an anomaly is indicative of MAC spoofing or indicative of a different event, such as a legitimate update to a device. Anomaly module 366 may determine whether the anomaly is indicative of MAC spoofing or another event using one or more techniques, such as applying a machine learning model, comparing behavior of a device to known behaviors of MAC spoofing and/or other events, and/or other techniques. Anomaly module 366 may refrain from generating a notification and/or taking other actions based on determining that an anomaly is indicative of events other than MAC spoofing, such as a legitimate update (e.g., an update to a device that is not anomalous). In an example, anomaly module 366 determines that an anomaly is indicative of a legitimate update for a device. Anomaly module 366 refrains from generating a notification based on determining that the anomaly being indicative of the legitimate update.

In some examples, anomaly module 366 generates events with one or more details upon detecting an anomaly. Anomaly module 366 may generate events that include anomaly details that include the affected MAC address, the previous and current fingerprints, and the attributes that triggered the detection, such as changes in device type, OS, or manufacturer, context information that includes metadata of the timestamp of detection, contributing data sources (e.g., DHCP, User Agent), and historical behavior of the MAC address for validation. Anomaly module 366 may generate the events as additionally or alternatively including supporting evidence that includes indications of cross-source inconsistencies (e.g., DHCP indicates a printer while LLDP suggests a Linux device) and group behavior insights (e.g., isolated changes versus widespread updates across similar devices).

Anomaly module 366 may provide one or more benefits for the detection of anomalies that include scalable detection where anomaly module 366 operates on real-time data streams from existing infrastructure, comprehensive analysis where anomaly module 366 leverages multiple data sources for high-confidence detection, and adaptive logic where anomaly module 366 differentiates between spoofing attempts and legitimate updates, reducing noise in the system. Anomaly module 366 may use this framework to ensure robust detection of MAC spoofing scenarios, enhancing the security posture of campus and branch networks while leveraging the fingerprinting service's capabilities.

In some examples, anomaly module 366 may determine, for a wireless client device and in response to determining that there is no anomaly between the packet information of the client device associated with the subsequent network access request and packet information 261, whether the location information (e.g., geolocation) of the client device associated with the subsequent network access request deviates from location information 262 in fingerprint info store 358. In these examples, anomaly module 366 may obtain, from a NAC system or other source, information indicating whether the geolocation information is not within a mobility pattern of the client device. In response to determining that the geolocation information of the client device associated with the subsequent network access request is not within the mobility pattern of the client device associated with the prior network access request, anomaly module 366 may instruct a policy manager of a NAC system (e.g., policy manager 144) to enforce the authorizations or access policies to manage the network access of the client device associated with the subsequent network access request.

In some examples, anomaly module 366 may generate an instance of user interface 310 as including a visual indication of an anomaly. Anomaly module 366 may cause NMS 300 to output user interface 310 to an administrator for the administrator to address the anomaly. For example, anomaly module 366 cause NMS 300 to output user interface as web interface that includes a visual indication of an anomaly consistent with MAC spoofing.

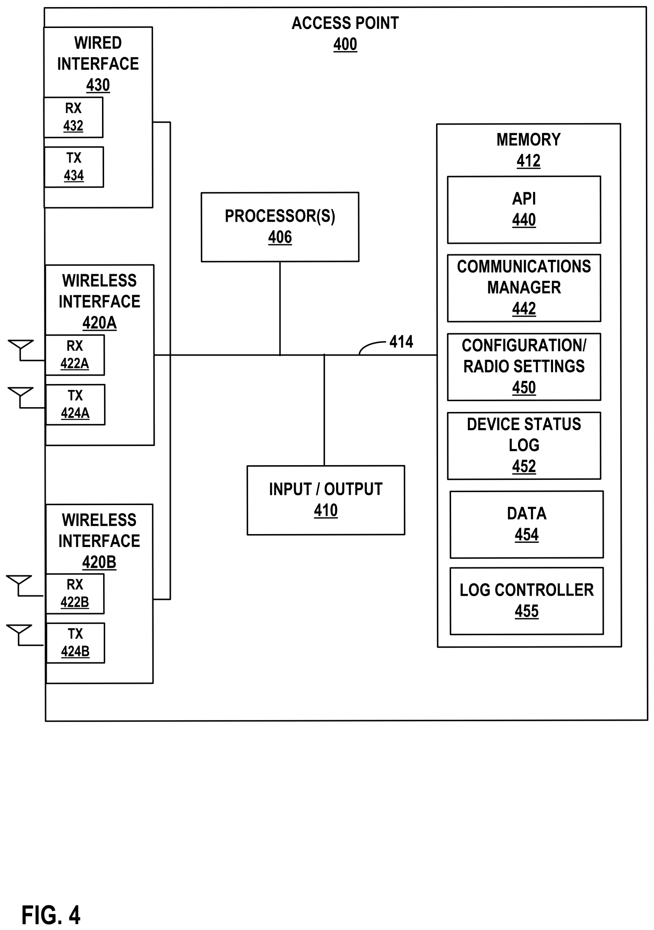

FIG. 4 is a block diagram of an example access point (AP) device 400, in accordance with one or more techniques of this disclosure. Example access point 400 shown in FIG. 4 may be used to implement any of APs 142 as shown and described herein with respect to FIG. 1A. Access point 400 may comprise, for example, a Wi-Fi, Bluetooth and/or Bluetooth Low Energy (BLE) base station or any other type of wireless access point.

In the example of FIG. 4, access point 400 includes a wired interface 430, wireless interfaces 420A-420B one or more processor(s) 406, memory 412, and input/output 410, coupled together via a bus 414 over which the various elements may exchange data and information. Wired interface 430 represents a physical network interface and includes a receiver 432 and a transmitter 434 for sending and receiving network communications, e.g., packets. Wired interface 430 couples, either directly or indirectly, access point 400 to a wired network device, such as one of switches 146 or routers 147 of FIGS. 1A, 1B, within the wired network via a cable, such as an Ethernet cable.

First and second wireless interfaces 420A and 420B represent wireless network interfaces and include receivers 422A and 422B, respectively, each including a receive antenna via which access point 400 may receive wireless signals from wireless communications devices, such as UEs 148 of FIGS. 1A, 1B. First and second wireless interfaces 420A and 420B further include transmitters 424A and 424B, respectively, each including transmit antennas via which access point 400 may transmit wireless signals to wireless communications devices, such as UEs 148 of FIGS. 1A, 1B. In some examples, first wireless interface 420A may include a Wi-Fi 802.11 interface (e.g., 2.4 GHz and/or 5 GHz) and second wireless interface 420B may include a Bluetooth interface and/or a Bluetooth Low Energy (BLE) interface. As described above, AP 400 may request network access for one or more UEs 148 from a nearby NAC system, e.g., NAC system 280 of FIG. 2 or one of NAC systems 180 of FIGS. 1A, 1B.

Processor(s) 406 are programmable hardware-based processors configured to execute software instructions, such as those used to define a software or computer program, stored to or provided by a computer-readable storage medium (such as memory 412), such as computer-readable mediums including a storage device (e.g., a disk drive, or an optical drive) or a memory (such as Flash memory or RAM) or a transmission medium (such as bus 414 and/or any of interfaces 420, 430) or any other type of volatile or non-volatile memory, that stores and/or conveys instructions to cause the one or more processors 406 to perform the techniques described herein.

Memory 412 includes one or more devices configured to store programming modules and/or data associated with operation of access point 400. For example, memory 412 may include a computer-readable storage medium, such as non-transitory computer-readable mediums including a storage device (e.g., a disk drive, or an optical drive) or a memory (such as Flash memory or RAM) or any other type of volatile or non-volatile memory, that stores instructions to cause the one or more processor(s) 406 to perform the techniques described herein.

In this example, memory 412 stores executable software including an application programming interface (API) 440, a communications manager 442, configuration settings 450, a device status log 452, data storage 454, and log controller 455. Device status log 452 includes a list of events specific to access point 400. The events may include a log of both normal events and error events such as, for example, memory status, reboot or restart events, crash events, cloud disconnect with self-recovery events, low link speed or link speed flapping events, Ethernet port status, Ethernet interface packet errors, upgrade failure events, firmware upgrade events, configuration changes, etc., as well as a time and date stamp for each event. Log controller 455 determines a logging level for the device based on instructions from NMS 130. Data 454 may store any data used and/or generated by access point 400, including data collected from UEs 148, such as data used to calculate one or more SLE metrics, that is transmitted by access point 400 for cloud-based management of wireless networks 106A by NMS 130/300.

Input/output (I/O) 410 represents physical hardware components that enable interaction with a user, such as buttons, a display, and the like. Although not shown, memory 412 typically stores executable software for controlling a user interface with respect to input received via I/O 410. Communications manager 442 includes program code that, when executed by processor(s) 406, allow access point 400 to communicate with UEs 148 and/or network(s) 134 via any of interface(s) 430 and/or 420A-420C. Configuration settings 450 include any device settings for access point 400 such as radio settings for each of wireless interface(s) 420A-420C. These settings may be configured manually or may be remotely monitored and managed by NMS 130 to optimize wireless network performance on a periodic (e.g., hourly or daily) basis.

As described herein, AP device 400 may measure and report network data from status log 452 to NMS 130. The network data may comprise event data, telemetry data, and/or other SLE-related data. The network data may include various parameters indicative of the performance and/or status of the wireless network. The parameters may be measured and/or determined by one or more of the UE devices and/or by one or more of the APs in a wireless network. NMS 130/300 may determine one or more SLE metrics based on the SLE-related data received from the APs in the wireless network and store the SLE metrics as network data 137 (FIG. 1B).

In accordance with the techniques described in this disclosure, AP device 400 may send fingerprinting information associated with client devices to NMS 130 via NAC systems 180. For example, data 454 may include fingerprinting information collected from packets sent by UEs 148, DHCP information from DHCP packets, LLDP information from LLDP packets, CDP information from CDP packets, HTTP user agent information from HTTP packets, and/or other identifying information sent by UEs 148. In some examples, AP 400 may generate data 454 as including a copy of the various packets sent by UEs 148, RSSI values of UEs 148 that can be used to determine geolocation of UEs 148, and/or other information.

In some examples, NAC system 180 and/or NMS 130 may send a request to AP device 400 for data attributes of a client device connected to AP device 400. AP device 400 may provide the data attributes and/or information related to the data attributes, such as a copy of a DHCP packet, LLDP packet, CDP packet, HTTP packet, or any other packet including information identifying a client device or network behavior of the client device. AP device 400 may send data attributes used by a NAC system or NMS 130 to construct a MAC address profile.

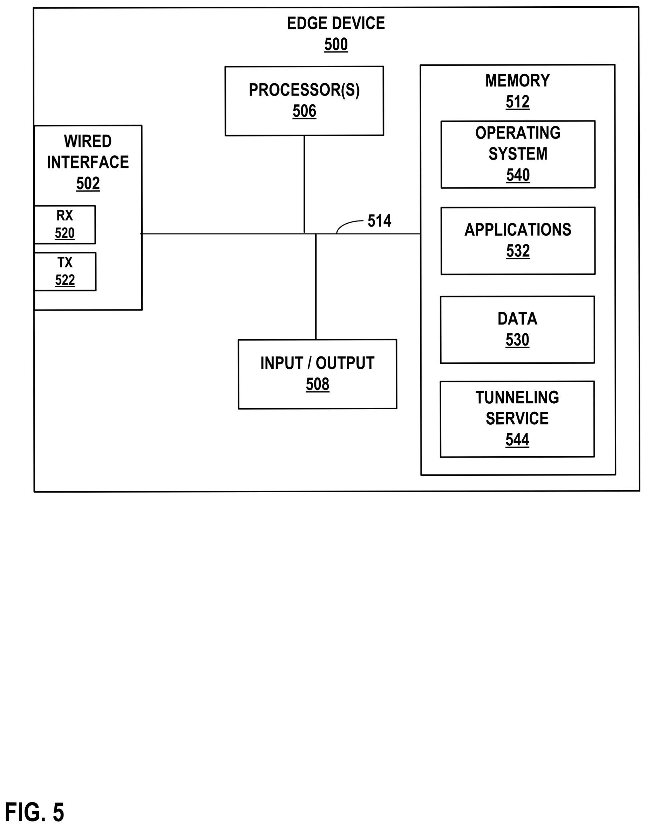

FIG. 5 is a block diagram illustrating an example edge device 500, in accordance with one or more techniques of this disclosure. Edge device 500 comprises a cloud-managed, wireless local area network (LAN) controller. Edge device 500 may be used to implement, for example, any of edge devices 150 in FIGS. 1A, 1B. In such examples, edge device 500 comprises an on-premises device at a site 102 that is in communication with NMS 130 and one or more on-premises NAS devices 108, e.g., one or more APs 142, switches 146, or routers 147, from FIGS. 1A, 1B. Edge device 500 with NMS 130 and may operate to extend certain microservices from NMS 130 to the on-premises NAS devices 108 while using NMS 130 and its distributed software architecture for scalable and resilient operations, management, troubleshooting, and analytics.

In this example, edge device 500 includes a wired interface 502, e.g., an Ethernet interface, a processor 506, input/output 508, e.g., display, buttons, keyboard, keypad, touch screen, mouse, etc., and a memory 512 coupled together via a bus 514 over which the various elements may interchange data and information. Wired interface 502 couples edge device 500 to a network, such as network 134 shown in FIG. 1A and/or any local area networks. Wired interface 502 includes a receiver 520 and a transmitter 522 by which edge device 500 receives/transmits data and information to/from any of NAS devices 108 and NMS 130 and/or NAC systems 180. Though only one interface is shown by way of example, edge device 500 may have multiple communication interfaces and/or multiple communication interface ports.

Memory 512 stores executable software applications 532, operating system 540 and data/information 530. Data 530 may include a system log and/or an error log that stores event data, including behavior data, for edge device 500. Tunneling service 544 provides on-premises tunnel termination from APs and other NAS devices. Tunneling service 544 further provides a secure tunnel proxy to NMS 130 and/or NAC systems 180. In one scenario, one or more of the NAS devices 108, e.g., switch 146A from FIG. 1B, may not support establishment of secure tunnels, e.g., WebSocket or RadSec tunnels, directly with NMS 130 and/or NAC systems 180. In this scenario, tunneling service 544 of edge device 500 provides a tunnel proxy to enable authentication requests received from switch 146A via a secure tunnel 178A to be tunneled to NAC system 180A using a RadSec tunnel 182A, as shown in FIG. 1B, and/or enable network data of switch 146A to be tunneled to NMS 130 using a WebSocket.

In accordance with the techniques described in this disclosure, edge device 500 may send information that includes data attributes for a MAC address profile associated with client devices to NAC systems 180. For example, data 530 may include data attributes derived from collected packets sent by UEs 148. For example, data 530 may include DHCP information from DHCP packets, LLDP information from LLDP packets, CDP information from CDP packets, HTTP user agent information from HTTP packets, and/or other identifying information sent by UEs 148. In some examples, data 530 may include a copy of the various packets sent by UEs 148. In some examples, data 530 may include port information (e.g., port identifier) of UEs 148 that are connected to one or more switches (e.g., switch 146A) coupled to edge device 500.

Edge device 500 may provide the collected information to NAC systems 180. For example, NAC system 180 and/or NMS 130 may send a request to edge device 500 for fingerprinting information of a client device connected to a switch coupled to edge device 500. Edge device 500 may provide the fingerprinting information, such as a copy of a DHCP packet, LLDP packet, CDP packet, HTTP packet, port information, or any other packet including information identifying a client device or network behavior of the client device.

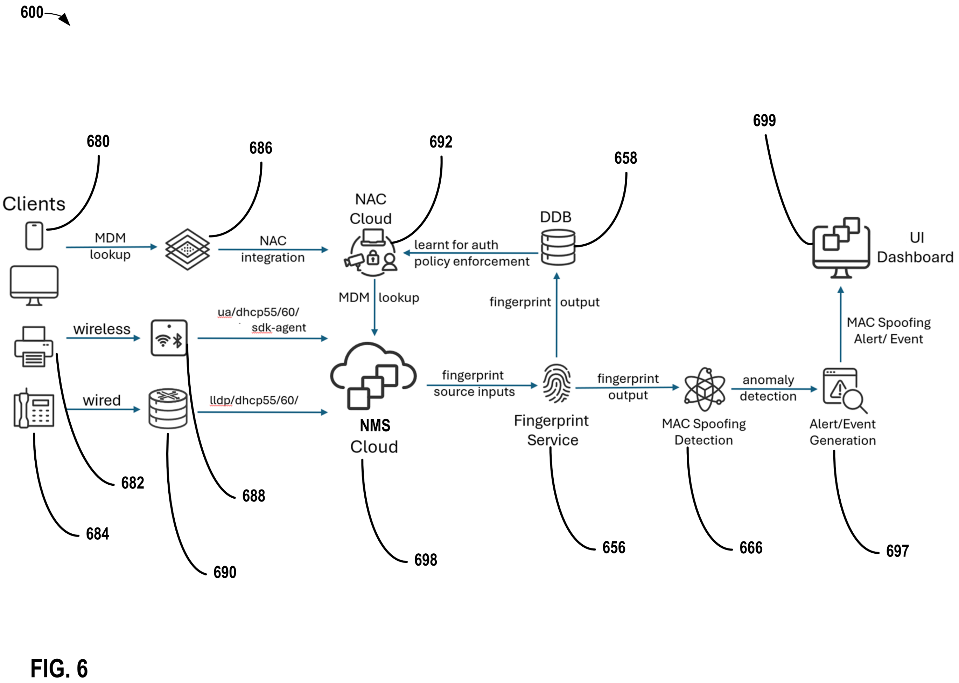

FIG. 6 is a conceptual diagram illustrating an example operation of fingerprinting and anomaly detection, in accordance with the techniques of this disclosure. FIG. 6 includes network system 600, which may be similar to network system 100 as illustrated in FIGS. 1A-1B and provide similar functionality.

Network system 600 includes one or more of MDM providers 686, which may be mobile device managers configured to obtain data from and manage mobile devices 680. Network system 600 includes one or more of mobile devices 680, which may include one or more types of devices, such as smartphones, tablets, laptops, desktops, and other types of client devices. While described as "mobile", mobile devices 680 may include one or more stationary devices (e.g., desktop computers). MDM providers 686 may obtain one or more types of information from mobile devices 680 that includes device type (e.g., smartphone, tablet), device family, OS type, OS version, location, etc., and provide the information to NAC cloud 692. In an example, NAC cloud 692 generates a request for information from MDM providers 686 in response to an authentication request from a client device. MDM providers 686 receive the request and provide information to NAC cloud 692.

Network system 600 includes an agent SDK, which may be a data pipeline from agents executed by one or more of wireless devices 682. Wireless devices 682 may include one or more devices wirelessly connected to a network of network system 600 via network access devices 688 (e.g., access points) and may overlap with mobile devices 680 in some examples. For instance, wireless devices 682 may include a desktop computer that executes an agent that reports information regarding the desktop via the agent SDK. Wireless devices 682 may execute the agents, which in turn may provide information regarding wireless devices 682 to network access devices 688.

Network system 600 includes switches 690, which may be network switches communicatively connected to wired devices 684. Wired devices 684 may include one or more devices connected to a network via a wired connection, such as IoT devices, printers, cameras, etc. Wired devices 684 may provide information to switches 690, for switches 690 to communicate to NAC cloud 692.

MDM providers 686, network access devices 688, and/or switches 690 may provide information to NAC cloud 692 and/or NMS cloud 698. MDM providers 686, network access devices 688, and switches 690 may provide information that includes: useragents and MAC OUI, where HTTP useragents are processed to extract device family, model and OS and where MAC OUI points to the manufacturer. MDM providers 686, network access devices 688, and switches 690 may additionally or alternatively provide information that includes DHCP request options 55/60 where parameter request list (55) and DHCP vendor (60) are mapped to a client's device type, model and OS, information from an SDK-Agent that offers a comprehensive fingerprint pulled directly from the device and acts as labeled data for other sources, LLDP neighbor information from managed switches and routers used to derive client model, manufacturer and OS and/or MDM lookup information that provides comprehensive fingerprint information polled from MDM providers integrated with a NAC.

Network system 600 includes NAC cloud 692, which may include one or more NAC systems, such as NAC systems 180 as illustrated in FIGS. 1A-1B or NAC system 280 of FIG. 2. NAC cloud 692 may be a cloud-based NAC system or an on-premises NAC system. NAC cloud 692 may obtain the information from one or more sources, such as MDM providers 686, network access devices 688, and/or switches 690 as part of determining whether to authenticate and authorize a network device. For example, NAC cloud 692 may obtain information regarding a type of a device from MDM providers 686. NAC cloud 692 may provide the information to NMS cloud 698 for NMS cloud to fingerprint a device.

Network system 600 includes NMS cloud 698, which may be similar to NMS 130 as illustrated in FIGS. 1A-1B of NMS 300 of FIG. 3, and provide similar functionality. In some examples, NMS cloud 698 may include one or more on-premises systems. NMS cloud 698 may ingest data received from NAC cloud 692 and/or other sources (e.g., MDM providers 686, the agent SDK executed by wireless devices 682, and/or switches 690) to generate fingerprint information of a device.

NMS cloud 698 may process the received using fingerprinting module 656 (illustrated as "fingerprint service 656" in FIG. 6) to generate fingerprinting information of a device. As a part of generating fingerprinting information, fingerprinting module 656 may aggregate data attributes associated with the device to construct a MAC address profile. Fingerprinting module 656 may construct a MAC address profile that is a consolidated MAC address profile and as including one or more types of information, such as: indication of device type that includes an identification of a category of the device. (e.g., Printers, Surveillance Cameras, Workstation, Access Point, etc.), identification of device family and model that identifies the device family (e.g., smartphones from a particular manufacturer, printers from a particular manufacturer, access point, etc.) and model (e.g., 12 Pro, 9125e, AP41-US, etc.), identification of manufacturer: Identifies the manufacturer of the device or the interface card (from OUI), identification of Operating System and OS version that identifies the operating system and version running on the client's device, identification of an IP address associated with a client, and/or metadata that includes an organization ID, site ID, and timestamp (creation, update) of the fingerprint among other types of information.

Fingerprinting module 656 may provide a MAC address profile of a device to NAC cloud 692 for inclusion in fingerprint info store 658 (illustrated as "DDB" in FIG. 6). While illustrated as a separate component of NAC cloud 692, fingerprint info store 658 may be included in NAC cloud 692 and/or NMS cloud 698. In some examples, fingerprinting module 656 may provide a MAC address profile of a device to NAC cloud 692. NAC cloud 692 may store the MAC address profile in fingerprint info store 658.

NAC cloud 692 may determine a level of authorization for a device based on the MAC address profile received from NMS cloud 698. NAC cloud 692 may apply one or more policies to the fingerprinting information to determine a level of authorization for the device. In some examples, NAC cloud 692 may perform a policy enforcement action that includes revoking authorization for a device.

Anomaly module 666 (illustrated as "MAC Spoofing Detection" in FIG. 6) may process MAC address profiles constructed by fingerprinting module 656 to detect anomalies between a current MAC address profile and a known MAC address profile associated with a MAC address. Anomaly module 666 may compare a current MAC address profile of a device (e.g., a MAC address profile generated by a fingerprinting module 656) with a known MAC address profile (e.g., a historical and/or concurrent MAC address profile). Based on detecting an anomaly, anomaly module 666 determines whether an anomaly is indicative of MAC spoofing by the device. Anomaly module 666 may detect the anomaly and determine whether the anomaly is indicative of MAC spoofing, such as temporal analysis, cross-source validation, and/or group analysis.

Anomaly module 666 may output indications of MAC spoofing to one or more recipients. While illustrated as a separate component, "Alert/Event Generation 697" may be performed by anomaly module 666 and/or another component of NMS cloud 698. In some examples, anomaly module 666 may provide a MAC address profile to NAC cloud 692 that is indicative of MAC spoofing for NAC cloud 692 to take appropriate authorization actions. Anomaly module 666 may provide an indication of the MAC spoofing to NMS dashboard 699 for display to an administrator.

Network system 600 includes NMS dashboard 699 (illustrated as "UI Dashboard 699"). While illustrated as a separate component, NMS dashboard 699 may be a user interface output by NMS cloud 698 to one or more recipient devices (e.g., an administrator device). NMS dashboard 699 may include one or more visual elements that display information regarding network system 600. For example, NMS dashboard 699 may include information regarding the detection of an anomaly consistent with MAC spoofing output to an administrator for review.

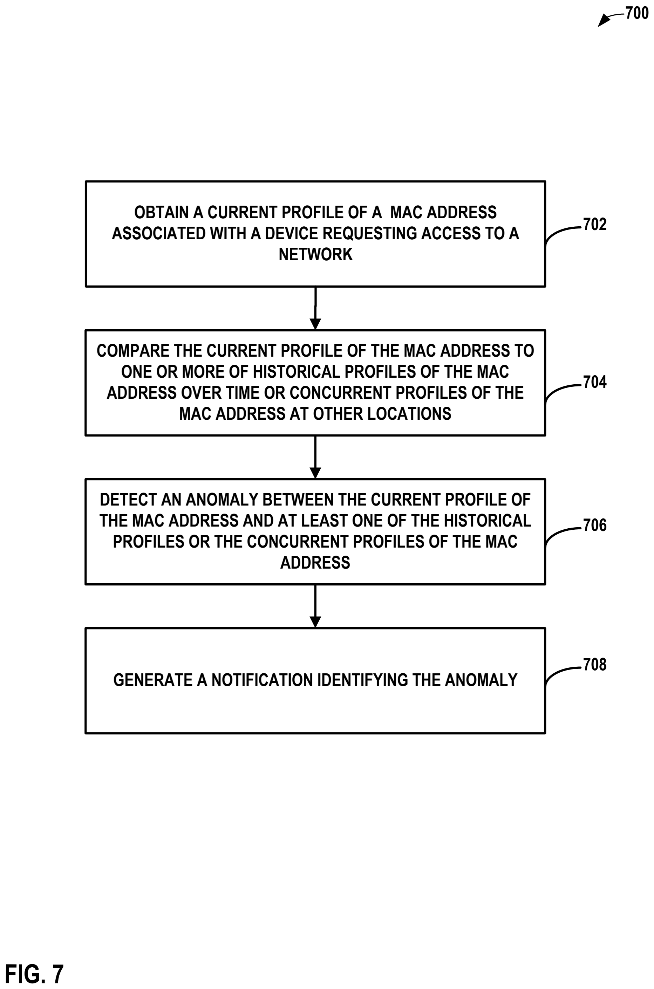

FIG. 7 is a flow chart illustrating an example operation 700 to detect anomalies, in accordance with one or more techniques of this disclosure. The example operation of FIG. 7 is described with respect to NMS 130 of FIG. 1A and 1B. In other examples, NMS 300 of FIG. 3, any of NAC systems 180 of FIGS. 1A and 1B, or NAC system 280 of FIG. 2 may perform some or all of the steps of operation 700.

A computing system, such as NMS 130, obtains a current profile of a MAC address associated with a device, such client device 149, requesting access to a network (702). A NAC system may receive a request from client device 149 at a location, such as site 102 to access a network, such as one of network(s) 134 and provide an indication of the request to NMS 130. NMS 130 may obtain a MAC address profile of client device 149 by obtaining data attributes from one or more sources and constructing the current MAC address using aggregated data attributes.

NMS 130 compares the current profile of the MAC address to one or more historical profiles of the MAC address over time or concurrent profiles of the MAC address at other locations (704). NMS 130 may obtain known MAC address profiles (e.g., the historical and/or concurrent profiles) from one or more sources, such as a data store of MAC address profiles. NMS 130 may compare the MAC address profiles by comparing one or more data attributes included in the MAC address profiles. In an example, NMS 130 obtains a concurrent MAC address profile associated with client device 149 and compares the concurrent MAC address profile to a current MAC address profile. NMS 130 determines a discrepancy between the MAC address profiles consistent with client device 149 reporting as a printer at site 102A and reporting as a webcam at site 102N.

NMS 130 detects an anomaly between the current profile of the MAC address and at least one of the historical profiles or the concurrent profiles of the MAC address (706). NMS 130 may detect an anomaly in one or more ways, such as comparing MAC address profiles associated with a device, applying machine learning models, and/or other ways. In some examples, NMS 130 determines whether the anomaly is consistent with MAC spoofing or is the result of a legitimate change (e.g., a software update to a device).

NMS 130 generates a notification identifying the anomaly (708). NMS 130 may generate a notification that includes information regarding the anomaly, such as information supporting that an anomaly is indicative of MAC spoofing, an identifier of the device associated with the MAC spoofing, and/or other information. NMS 130 may provide the notification to one or more recipients, such as an administrator device. For example, NMS 130 may push a MAC address profile indicative of MAC spoofing to a NAC system for the NAC system to enforce an authorization policy for the device associated with the MAC address profile (e.g., revoking or reducing authorization based on the identification of MAC spoofing).

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively, or additionally, if implemented in software or firmware, the techniques may be realized at least in part by a computer-readable data storage medium comprising instructions that, when executed, cause a processor to perform one or more of the methods described above. For example, the computer-readable data storage medium may store and/or convey such instructions for execution by a processor.

A computer-readable medium may form part of a computer program product, which may include packaging materials. A computer-readable medium may comprise a computer data storage medium such as random-access memory (RAM), read-only memory (ROM), non-volatile random-access memory (NVRAM), electrically erasable programmable read-only memory (EEPROM), Flash memory, magnetic or optical data storage media, and the like. In some examples, an article of manufacture may comprise one or more computer-readable storage media.

In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

A computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems.

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

Therefore, from one perspective, there have been described techniques for a computing system that compares media access control (MAC) address profiles associated with the MAC address of a device to detect anomalies between the MAC address profiles. In one example, the computing system obtains a current profile of a MAC address associated with a device requesting access to a network at a location. The computing system compares the current profile of the MAC address to one or more historical profiles of the MAC address over time or concurrent profiles of the MAC address at other locations. The computing system detects an anomaly between the current profile of the MAC address and at least one of the historical profiles or the concurrent profiles of the MAC address. The computing system generates a notification identifying the anomaly.

Further examples of feature combinations taught by the present disclosure are set out in the following numbered clauses.

Clause 1. A system comprising: memory; and processing circuitry in communication with the memory and configured to: obtain a current profile of a media access control (MAC) address associated with a device requesting access to a network at a location; compare the current profile of the MAC address to one or more of historical profiles of the MAC address over time or concurrent profiles of the MAC address at other locations; detect an anomaly between the current profile of the MAC address and at least one of the historical profiles or the concurrent profiles of the MAC address; and generate a notification identifying the anomaly.

Clause 2. The system of clause 1, wherein the processing circuitry is configured to: based on detecting the anomaly, determine a quantity of other devices that are also experiencing the anomaly, wherein the other devices are a same type of device as the device; and based on the quantity of other devices not satisfying a threshold, determine that the anomaly is indicative of MAC spoofing.

Clause 3. The system of clause 1 or 2, wherein the processing circuitry is configured to, based on detecting the anomaly, validate the current profile of the MAC address, wherein to validate the current profile, the processing circuitry is further configured to: compare a first attribute of the current profile of the MAC address as indicated by a first data source to the first attribute of the current profile of the MAC address as indicted by one or more second data sources; and based on the first data source and the one or more second data sources indicating inconsistent data for the first attribute of the current profile of the MAC address, determine that the anomaly is indicative of MAC spoofing.

Clause 4. The system of clause 3, wherein to compare the first attribute from the first data source to the first attribute from the one or more second data sources, the processing circuitry is configured to: select a comparatively high confidence source as the first data source and one or more comparatively low confidence sources as the one or more second data sources.

Clause 5. The system of any preceding clause, wherein to obtain the current profile of the MAC address, the processing circuitry is configured to: obtain data attributes of the device from a plurality of sources; and construct the current profile of the MAC address associated with the device based on aggregated data attributes from the plurality of sources.

Clause 6. The system of any preceding clause, wherein to generate the notification identifying the anomaly, the processing circuitry is configured to: determine whether the anomaly is indicative of MAC spoofing or a different event; and based on the anomaly being indicative of MAC spoofing, generate the notification.

Clause 7. The system of clause 6, wherein the different event is a legitimate update, and wherein the processing circuitry is further configured to: based on the anomaly being indicative of the legitimate update, refrain from generating the notification.

Clause 8. The system of any preceding clause, wherein the notification includes one or more of: details of the anomaly, context information associated with the detection of the anomaly, or supporting evidence that the anomaly is indicative of MAC spoofing.

Clause 9. A method, comprising: obtaining, by a computing system, a current profile of a media access control (MAC) address associated with a device requesting access to a network at a location; comparing, by the computing system, the current profile of the MAC address to one or more of historical profiles of the MAC address over time or concurrent profiles of the MAC address at other locations; detecting, by the computing system, an anomaly between the current profile of the MAC address and at least one of the historical profiles or the concurrent profiles of the MAC address; and generating, by the computing system, a notification identifying the anomaly.

Clause 10. The method of clause 9, further comprising: based on detecting the anomaly, determining, by the computing system, a quantity of other devices that are also experiencing the anomaly, wherein the other devices are of a same type of device as the device; and based on the quantity of other devices not satisfying a threshold, determining that the anomaly is indicative of MAC spoofing.

Clause 11. The method of clause 9 or 10, further comprising: based on detecting the anomaly, validating, by the computing system, the current profile of the MAC address, wherein validating the current profile further comprises: comparing a first attribute of the current profile of the MAC address as indicated by a first data source to the first attribute of the current profile of the MAC address as indicted by one or more second data sources; and based on the first data source and the one or more second data sources indicating inconsistent data for the first attribute of the current profile of the MAC address, determining that the anomaly is indicative of MAC spoofing.

Clause 12. The method of clause 11, wherein comparing the first attribute from the first data source to the first attributed from the one or more second data sources further comprises: selecting a comparatively high-confidence source as the first data source and one or more comparatively low-confidence sources as the one or more second data sources.

Clause 13. The method of any of clauses 9 to 12, wherein obtaining the current profile of the MAC address further comprises: obtaining data attributes of the device from a plurality of sources; and constructing the current profile of the MAC address associated with the device based on aggregated data attributes from the plurality of sources.

Clause 14. The method of any of clauses 9 to 13, wherein generating the notification identifying the anomaly further comprises: determining whether the anomaly is indicative of MAC spoofing or a different event; and based on the anomaly being indicative of MAC spoofing, generating the notification.

Clause 15. The method of clause 14, wherein the different event is a legitimate update, and further comprising: based on the anomaly being indicative of the legitimate update, refraining from generating the notification.

Clause 16. The method of any of clauses 9 to 15, wherein the notification includes one or more of: details of the anomaly, context information associated with the detection of the anomaly, or supporting evidence that the anomaly is indicative of MAC spoofing.

Clause 17. Computer-readable media configured with instructions that, when executed, cause processing circuitry to: obtain a current profile of a media access control (MAC) address associated with a device requesting access to a network at a location; compare the current profile of the MAC address to one or more of historical profiles of the MAC address over time or concurrent profiles of the MAC address at other locations; detect an anomaly between the current profile of the MAC address and at least one of the historical profiles or the concurrent profiles of the MAC address; and generate a notification identifying the anomaly.

Clause 18. The computer-readable media of clause 17, wherein the instructions further cause the processing circuitry to: based on detecting the anomaly, determine a quantity of a plurality of other devices that are also experiencing the anomaly, wherein the plurality of other devices are of a same type of a device as the device; and based on the quantity of other devices not satisfying a threshold, determine that the anomaly is indicative of MAC spoofing.

Clause 19. The computer-readable media of clause 17 or 18, wherein the instructions further cause the processing circuitry to, based on detecting the anomaly, validate the current profile of the MAC address, wherein to validate the current profile, the instructions further cause the processing circuitry to: compare a first attribute of the current profile of the MAC address as indicated by a first data source to the first attribute of the current profile of the MAC address as indicted by one or more second data sources; and based on the first data source and the one or more second data sources indicating inconsistent data for the first attribute of the current profile of the MAC address, determine that the anomaly is indicative of MAC spoofing.

Clause 20. The computer-readable media of clause 19, wherein to compare the first attribute from the first data source to the first attribute from the one or more second data sources, the instructions further cause the processing circuitry to: select a comparatively high-confidence source as the first data source and one or more comparatively low-confidence sources as the one or more second data sources.

## Claims

1. A system comprising:
memory; and
processing circuitry in communication with the memory and configured to:
obtain a current profile of a media access control, MAC, address associated with a device requesting access to a network at a location;
compare the current profile of the MAC address to one or more of historical profiles of the MAC address over time or concurrent profiles of the MAC address at other locations;
detect an anomaly between the current profile of the MAC address and at least one of the historical profiles or the concurrent profiles of the MAC address; and
generate a notification identifying the anomaly.

2. The system of claim 1, wherein the processing circuitry is configured to:
based on detecting the anomaly, determine a quantity of other devices that are also experiencing the anomaly, wherein the other devices are a same type of device as the device; and
based on the quantity of other devices not satisfying a threshold, determine that the anomaly is indicative of MAC spoofing.

3. The system of any of claims 1-2, wherein the processing circuitry is configured to, based on detecting the anomaly, validate the current profile of the MAC address, wherein to validate the current profile, the processing circuitry is further configured to:
compare a first attribute of the current profile of the MAC address as indicated by a first data source to the first attribute of the current profile of the MAC address as indicted by one or more second data sources; and
based on the first data source and the one or more second data sources indicating inconsistent data for the first attribute of the current profile of the MAC address, determine that the anomaly is indicative of MAC spoofing.

4. The system of claim 3, wherein to compare the first attribute from the first data source to the first attribute from the one or more second data sources, the processing circuitry is configured to:
select a comparatively high confidence source as the first data source and one or more comparatively low confidence sources as the one or more second data sources.

5. The system of any of claims 1-4, wherein to obtain the current profile of the MAC address, the processing circuitry is configured to:
obtain data attributes of the device from a plurality of sources; and
construct the current profile of the MAC address associated with the device based on aggregated data attributes from the plurality of sources.

6. The system of any of claims 1-5, wherein to generate the notification identifying the anomaly, the processing circuitry is configured to:
determine whether the anomaly is indicative of MAC spoofing or a different event; and
based on the anomaly being indicative of MAC spoofing, generate the notification.

7. The system of claim 6, wherein the different event is a legitimate update, and wherein the processing circuitry is further configured to:
based on the anomaly being indicative of the legitimate update, refrain from generating the notification.

8. The system of any of claims 1-7, wherein the notification includes one or more of:
details of the anomaly,
context information associated with the detection of the anomaly, or
supporting evidence that the anomaly is indicative of MAC spoofing.

9. A method, comprising:
obtaining, by a computing system, a current profile of a media access control, MAC, address associated with a device requesting access to a network at a location;
comparing, by the computing system, the current profile of the MAC address to one or more of historical profiles of the MAC address over time or concurrent profiles of the MAC address at other locations;
detecting, by the computing system, an anomaly between the current profile of the MAC address and at least one of the historical profiles or the concurrent profiles of the MAC address; and
generating, by the computing system, a notification identifying the anomaly.

10. The method of claim 9, further comprising:
based on detecting the anomaly, determining, by the computing system, a quantity of other devices that are also experiencing the anomaly, wherein the other devices are of a same type of device as the device; and
based on the quantity of other devices not satisfying a threshold, determining that the anomaly is indicative of MAC spoofing.

11. The method of any of claims 9-10, further comprising:
based on detecting the anomaly, validating, by the computing system, the current profile of the MAC address, wherein validating the current profile further comprises:
comparing a first attribute of the current profile of the MAC address as indicated by a first data source to the first attribute of the current profile of the MAC address as indicted by one or more second data sources; and
based on the first data source and the one or more second data sources indicating inconsistent data for the first attribute of the current profile of the MAC address, determining that the anomaly is indicative of MAC spoofing.

12. The method of claim 11, wherein comparing the first attribute from the first data source to the first attributed from the one or more second data sources further comprises:
selecting a comparatively high-confidence source as the first data source and one or more comparatively low-confidence sources as the one or more second data sources.

13. The method of any of claims 9-12, wherein obtaining the current profile of the MAC address further comprises:
obtaining data attributes of the device from a plurality of sources; and
constructing the current profile of the MAC address associated with the device based on aggregated data attributes from the plurality of sources.

14. The method of any of claims 9-13, further comprising steps corresponding to the functionality recited in any of claims 6-8.

15. Computer-readable media comprising instructions that, when executed by one or more programmable processors, cause the one or more programmable processors to perform the method recited by any of claims 9-14.
